# FASCICULE DE BREVET EUROPEEN

(11) **EP 3 902 643 B1**
(45) Date de publication et mention de la délivrance du brevet: **24.04.2024**
(21) Numéro de dépôt: 19845710.3
(22) Date de dépôt: 18.12.2019
(51) Int. Cl.: B21F 15/04, B21F 15/06, B21F 37/02, B29D 30/48, B21F 37/00

(54) **INSTALLATION DE FABRICATION DE TRINGLES POUR BANDAGES PNEUMATIQUES COMPRENANT UNE TÊTE DE PERMUTATION DES OUTILS DE COUPE ET DE SERTISSAGE**
VORRICHTUNG ZUR HERSTELLUNG VON WULSTDRÄHTEN FÜR LUFTREIFEN MIT EINEM KOPF ZUM UMSCHALTEN ZWISCHEN SCHNEID- UND CRIMPWERKZEUGEN
APPARATUS FOR MANUFACTURING BEAD WIRES FOR PNEUMATIC TYRES COMPRISING A HEAD FOR SWITCHING BETWEEN CUTTING AND CRIMPING TOOLS

(30) Priorité: 27.12.2018 FR 1874244; 31.01.2019 FR 1900951
(43) Date de publication de la demande: 03.11.2021
(73) Titulaire: COMPAGNIE GENERALE DES ETABLISSEMENTS MICHELIN, 63000 Clermont-Ferrand (FR)
(72) Inventeur: BERLIOUX, Loïc, 63040 Clermont-Ferrand Cedex 9 (FR); AMYOT, Christophe, 63040 Clermont-Ferrand Cedex 9 (FR)
(74) Mandataire: M.F.P. Michelin
(86) Numéro de dépôt international: PCT/FR2019/053137
(87) Numéro de publication internationale: WO 2020/136322

(56) Documents cités:
- JP-A- 2007 160 640
- JP-A- 2008 024 247
- US-A- 2 708 228

## Description

La présente invention concerne le domaine de la fabrication des tringles de renfort qui sont destinées à renforcer des bandages, notamment des bandages pneumatiques, afin d'assurer la tenue de tels bandages sur une jante.

De façon connue en soi, une tringle se présente sous la forme d'un élément annulaire en matériau rigide, généralement métallique, qui peut être constitué d'un toron comprenant plusieurs brins entrelacés.

Lors de la fabrication d'une tringle, il est donc connu de prévoir une opération de tressage au cours de laquelle on enroule un fil de tresse en spires hélicoïdales, autour d'une âme qui est fermée en anneau sur elle-même, de sorte à obtenir un tore tressé, puis une opération de jonction au cours de laquelle on fixe l'une à l'autre les extrémités dudit fil de tresse, par exemple au moyen d'un manchon serti, afin d'assurer la cohésion du tore tressé sous forme d'un élément annulaire qui constituera la tringle.

A cet effet, il est nécessaire d'ajuster, par une opération de coupe préalable à l'opération de jonction, la longueur des extrémités du fil de tresse, puis d'engager sur lesdites extrémités le manchon à sertir.

Ces opérations sont parfois délicates, ce qui peut les rendre difficilement reproductibles d'une tringle à l'autre.

En outre, il arrive que le manchon soit mal placé sur les extrémités du fil de tresse, ce qui conduit à une mise au rebut de la tringle, et ainsi à un gaspillage de matière première et d'énergie.

Pour tenter de pallier ces inconvénients, il a été proposé, par exemple par le document JP-2007-160640, d'utiliser des manchons tubulaires de forme très spécifique, comportant une butée centrale interne qui sépare deux logements extrémaux, ainsi que des mors de positionnement également très spécifiques comprenant des embouchures chanfreinées censées faciliter l'insertion des tronçons d'extrémité du fil dans lesdits logements extrémaux du manchon.

Une telle solution, qui peut certes accroître la fiabilité du sertissage, requiert toutefois de positionner précisément le manchon dans les mors de positionnement, puis d'insérer manuellement, avec soin, chacun des tronçons d'extrémité de fil dans le logement du manchon qui lui correspond, puis enfin, lorsque tous les éléments ont été pré-assemblés, de déclencher le sertissage.

La mise en oeuvre d'un tel procédé est donc longue et fastidieuse, et de surcroît coûteuse, et ce d'autant plus que la forme spécifique des manchons rend la production desdits manchons complexe.

Les objets assignés à l'invention visent par conséquent à remédier aux inconvénients susmentionnés et proposer une nouvelle installation de fabrication de tringles qui permette de réaliser des tringles de manière rapide, peu onéreuse, et fiable.

Les objets assignés à l'invention sont atteints au moyen d'une installation de fabrication d'une tringle destinée à renforcer un bandage, notamment un bandage pneumatique, ladite installation comprenant :
- une table de réception qui est agencée pour recevoir un tore tressé qui comprend au moins un fil, dit « fil de tresse », qui s'étend longitudinalement depuis un premier tronçon d'extrémité jusqu'à un second tronçon d'extrémité et qui est entrelacé en spires hélicoïdales autour de, et le long de, une ligne génératrice qui forme un anneau autour d'un axe principal qui correspond à l'axe central dudit tore tressé,
- un outil de coupe, agencé pour sectionner le premier tronçon d'extrémité et le second d'extrémité afin d'ajuster la longueur desdits premier et second tronçons d'extrémité,
- un outil de sertissage agencé pour venir sertir un manchon autour dudit premier tronçon d'extrémité et dudit second tronçon d'extrémité afin de réunir et fixer l'un à l'autre lesdits premier et second tronçons d'extrémité,
ladite installation étant caractérisée en ce qu'elle comprend une unité de configuration qui est agencée pour faire passer automatiquement ladite installation d'une première configuration de travail, dite « configuration de coupe », dans laquelle la table de réception coopère avec l'outil de coupe de manière à positionner le tore tressé et les premier et second tronçons d'extrémité pour que lesdits premier et second tronçons d'extrémité soient sectionnés par l'outil de coupe, à une seconde configuration de travail, dite « configuration de sertissage », distincte de la première configuration de travail, dans laquelle la table de réception coopère avec l'outil de sertissage de manière à positionner le tore tressé et les premier et second tronçons d'extrémité pour que l'outil de sertissage réunisse lesdits premier et second tronçons d'extrémité au moyen du manchon.

Avantageusement, l'unité de configuration permet d'enchaîner automatiquement les opérations de coupe et de sertissage, et d'exécuter lesdites opérations de manière précise et reproductible, en un temps très court.

On peut ainsi notamment réaliser l'ensemble des opérations nécessaires au manchonnage de la tringle sur une même installation, et ce avec une grande précision, puisque l'on peut conserver un même repère, attaché à l'installation, pour positionner automatiquement les uns par rapport aux autres le tore tressé et les outils de coupe et de sertissage.

En outre, l'invention permet, comme on le verra ci-après, de mettre en place une cinématique de reconfiguration de l'installation de fabrication qui est particulièrement favorable à la compacité et à l'efficacité de ladite installation.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble en perspective, un exemple d'installation selon l'invention.
La figure 2 illustre, selon une vue en coupe de côté, une tête de permutation basculante qui appartient à l'unité de configuration de l'installation de la figure 1, qui porte à la fois l'outil de coupe et l'outil de sertissage, et qui se trouve en configuration de coupe, avec l'outil de coupe en position à un emplacement de travail où ledit outil de coupe peut engager les tronçons d'extrémité du fil.
La figure 3 illustre, selon une vue en coupe de côté, la tête de permutation de la figure 2 en cours de basculement pour passer de la configuration de coupe à la configuration de sertissage.
La figure 4 illustre, selon une vue en coupe de côté, la tête de permutation des figures 2 et 3 basculée en configuration de sertissage, l'outil de sertissage ayant ici remplacé l'outil de coupe à l'emplacement de travail.
La figure 5 illustre, selon une vue partielle en perspective, une tringle obtenue conformément à l'invention, après que les premier et second tronçons d'extrémité et le manchon qui les lie soient revenus, par retour élastique, contre le corps du tore tressé.
La figure 6A illustre, selon une vue schématique de dessus, un premier jeu d'organes écarteurs, de type palettes, en position initiale par rapport au tore tressé, avant que lesdits premiers organes écarteurs n'engagent les tronçons d'extrémité.
La figure 6B illustre, selon une vue schématique en coupe de côté, le tore tressé dans la configuration qui correspond à la figure 6A.
La figure 7A illustre, selon une vue schématique de dessus, l'intervention des organes écarteurs du premier jeu afin de capturer les premier et second tronçons d'extrémité et d'écarter ces derniers du corps du tore tressé, ici en repoussant élastiquement lesdits tronçons d'extrémité vers l'intérieur du tore tressé.
La figure 7B illustre, selon une vue schématique en coupe de côté, le tore tressé dans la configuration qui correspond à la figure 7A.
La figure 8A illustre, selon une vue schématique de dessus, un déplacement du tore tressé, ici en rotation azimutale, qui est opéré par la table de réception selon une première phase de recherche afin de détecter l'un des premier et second tronçons d'extrémité saillants au moyen d'un capteur de tronçon d'extrémité, tandis que les premier et second tronçons d'extrémité saillants sont soutenus en appui glissant par les palettes formant les organes écarteurs du premier jeu.
La figure 8B illustre, selon une vue schématique en coupe de côté, le tore tressé dans la configuration qui correspond à la figure 8A.
La figure 9A illustre, selon une vue schématique de dessus, l'intervention de doigts de retenue appartenant à un second jeu d'organes écarteurs qui se positionnent entre le corps du tore tressé et les premier et second tronçons d'extrémité, dans l'espace créé par les organes écarteurs du premier jeu, afin de pouvoir soutenir lesdits premier et second tronçons d'extrémité lors des mouvements ultérieurs d'engagement/dégagement de la table de réception vis-à-vis des outils de coupe et de sertissage.
La figure 9B illustre, selon une vue schématique en coupe de côté, le tore tressé lors de la manoeuvre d'insertion des organes écarteurs du second jeu correspondant à la figure 9A.
La figure 10A illustre, selon une vue schématique de dessus, un déploiement secondaire des organes écarteurs du second jeu à l'encontre des premier et second tronçons d'extrémité, ici par ouverture angulaire des doigts de retenue, puis le retrait des organes écarteurs du premier jeu, à savoir les palettes, auxquelles sont ainsi substitués les doigts de retenue, et ce afin de dégager la zone de travail dans laquelle vont pouvoir opérer l'outil de coupe puis l'outil de sertissage.
La figure 10B illustre, selon une vue schématique en coupe de côté, le maintien en saillie d'un tronçon d'extrémité obtenu par l'appui procuré par un organe écarteur du second jeu, ici un doigt de retenue, déployé conformément à la configuration de la figure 10A.
La figure 11A illustre, selon une vue schématique de dessus, l'opération de coupe qui permet d'ajuster la longueur des premier et second tronçons d'extrémité, après que le tore tressé a été dans l'outil de coupe, par un mouvement d'engagement de la table de réception, et tandis que les premier et second tronçons d'extrémité sont toujours soutenus par l'unité d'écartement, ici par les doigts de retenue formant les organes écarteurs du second jeu.
La figure 11B est une vue schématique en coupe de côté de la configuration de la figure 11A.

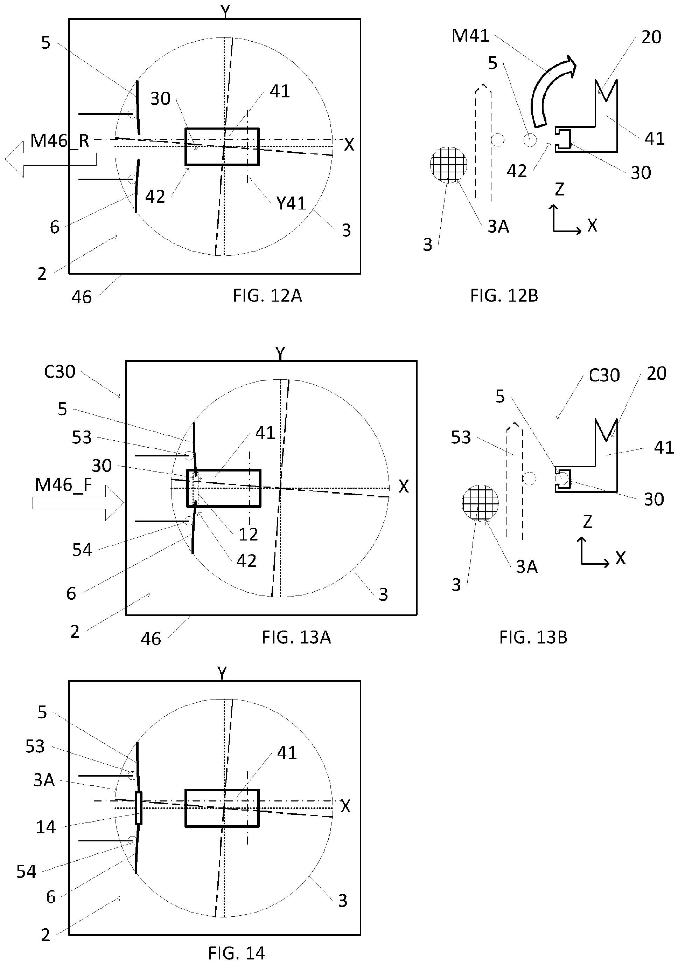

La figure 12A illustre, selon une vue schématique de dessus, le mouvement de dégagement opéré par la table de réception afin de manoeuvrer le tore tressé en retrait et d'extraire ledit tore tressé hors de l'outil de coupe, tandis que les premier et second tronçons d'extrémité sont toujours soutenus par les organes écarteurs du second jeu embarqués sur ladite table de réception, et ce pour permettre au système de positionnement de permuter les outils de coupe et de sertissage, de sorte à placer l'outil de sertissage en position pour recevoir le tore tressé, en lieu et place de l'outil de coupe.
La figure 12B est une vue schématique en coupe de côté de la configuration de la figure 12A.
La figure 13A illustre, selon une vue schématique de dessus, une opération de sertissage du manchon sur les premier et second tronçons d'extrémité, alors que la table de réception a exécuté un second mouvement d'engagement pour engager lesdits premier et second tronçons d'extrémité dans l'outil de sertissage, et que lesdits premier et second tronçons d'extrémité sont, pour ce faire, toujours soutenus par les doigts de retenue formant les organes écarteurs du second jeu.
La figure 13B est une vue schématique en coupe de côté de la configuration de la figure 13A.
La figure 14 illustre, selon une vue schématique de dessus, le dégagement hors de l'outil de sertissage du tore tressé et plus particulièrement du fil de tresse équipé de son manchon, ce qui peut notamment permettre une opération de contrôle de la présence de manchon par un capteur approprié, notamment un capteur optique.
La figure 15 illustre, selon une vue en coupe de côté, le détail d'une pince de sertissage de manchon utilisée par l'installation des figures 1 à 4.
La figure 16 illustre, selon une vue de détail en coupe, la pince de sertissage de la figure 22 garnie d'une préforme de manchon destinée à être déformée plastiquement autour du fil pour former le manchon.
La figure 17 illustre, selon une vue schématique de côté depuis l'intérieur du tore tressé, le positionnement du manchon selon l'invention, de telle sorte que ledit manchon, une fois les tronçons d'extrémité et ledit manchon revenus élastiquement en position contre les spires du tore tressé, soit strictement contenu sur la face radialement interne dudit tore tressé, sans déborder axialement ni radialement à l'extérieur du tore tressé.
La figure 18 illustre, selon une vue schématique, le principe d'une inclinaison de la tale de réception selon un angle d'assiette opposé à l'angle d'hélice des spires hélicoïdales du tore tressé, de manière à présenter les tronçons d'extrémité sensiblement à l'horizontale dans les outils de coupe, puis de sertissage.
La figure 19 illustre, selon une vue de détail de face, un outil de coupe à deux jeux de couteaux utilisé au sein de l'installation des figures 1 à 4.

La présente invention concerne une installation 1 de fabrication d'une tringle 9 destinée à renforcer un bandage, notamment un bandage pneumatique.

A titre d'exemple, ces tringles 9, destinées à assurer la tenue de tels bandages pneumatiques sur une jante, peuvent être adaptées pour équiper des bandages pneumatiques dont les dimensions, ici plus particulièrement le diamètre de jante auquel correspond le diamètre de la tringle 9, sont comprises entre 13 pouces et 24 pouces. L'invention est bien entendu applicable à la fabrication de tringles 9 destinées à des bandages pneumatiques pour des véhicules de tourisme, notamment dans les dimensions susmentionnées, mais également à la fabrication de tringles 9 destinées à des bandages pneumatiques pour poids-lourds, ou pour des engins de génie civil.

L'installation comprend un bâti 100.

Par commodité de description, on considérera que ce bâti 100 définit géométriquement un repère dit « repère fixe » comprenant un plan de référence (X, Y), de préférence horizontal, ainsi qu'un axe de référence Z, de préférence vertical, qui est normal au plan de référence (X, Y).

On désignera par « axe des abscisses » l'axe X, ici horizontal, du plan de référence (X, Y), et par « axe des ordonnées » l'axe Y, ici horizontal, qui définit le plan de référence (X, Y) avec l'axe des abscisses X, et qui forme, avec l'axe des abscisses X et l'axe de référence vertical Z un trièdre orthonormé.

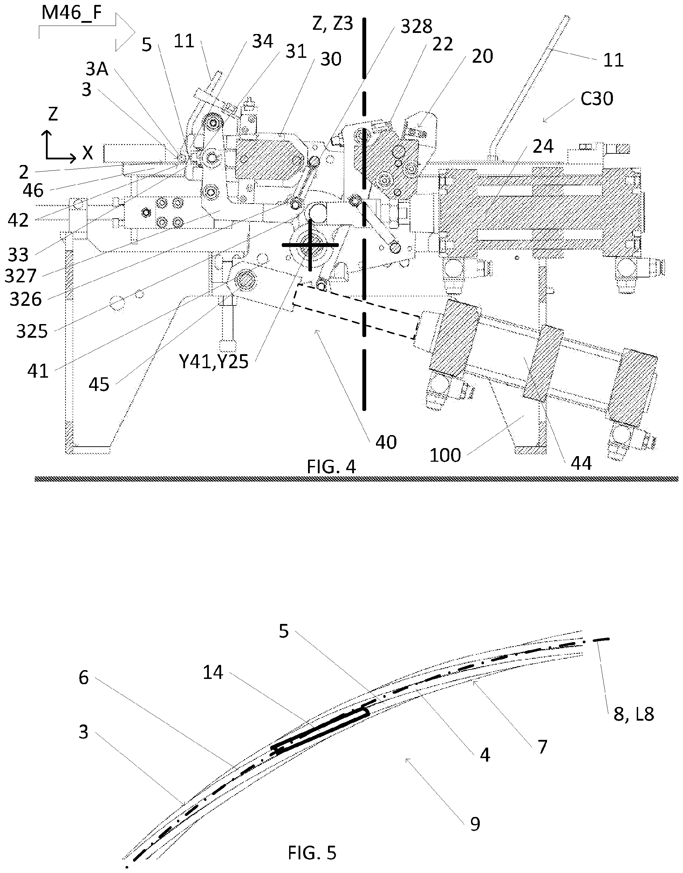

L'installation 1 comprend une table de réception 2 qui est agencée pour recevoir un tore tressé 3 qui, tel que cela est notamment visible sur la figure 5, comprend au moins un fil, dit « fil de tresse » 4, qui s'étend longitudinalement depuis un premier tronçon d'extrémité 5 jusqu'à un second tronçon d'extrémité 6 et qui est entrelacé en spires hélicoïdales 7 autour de, et le long de, une ligne génératrice L8 qui forme un anneau autour d'un axe principal qui correspond à l'axe central Z3 dudit tore tressé 3.

Le fil de tresse 4 est de préférence un fil métallique, par exemple en acier, éventuellement revêtu d'une couche protectrice. En variante, ledit fil de tresse 4 pourrait, sans sortir du cadre de l'invention, être réalisé en tout matériau adéquat, présentant un module de traction (Module d'Young) suffisamment élevé, et notamment en un matériau polymère adéquat, ou en un mélange adéquat de matériaux polymères, ou bien encore en matériau composite de métal et polymère.

Le fil de tresse pourra de préférence présenter un diamètre de section compris entre 1,20 mm et 3,5 mm, et par exemple choisi parmi 1,30 mm, 1,55 mm, 1,75 mm 2,00 mm et 3,00 mm.

Le fil de tresse 4 pourra être conformé lors d'une étape préalable de tressage, au cours de laquelle on mettra en forme les spires hélicoïdales 7 pour obtenir le tore tressé 3. Les opérations de coupe, respectivement de sertissage, selon l'invention interviendront ultérieurement à cette opération de tressage.

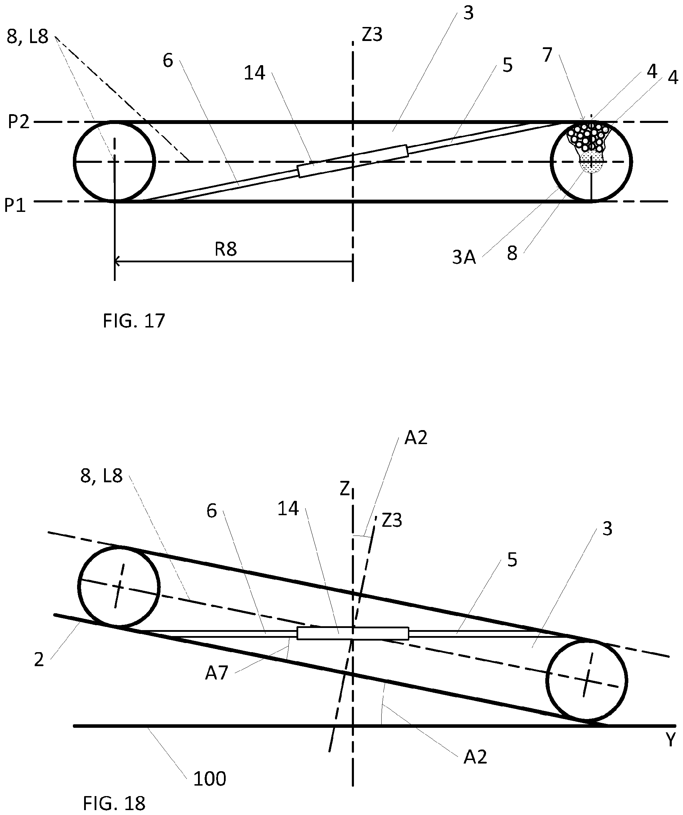

Le fil de tresse 4 s'étend avantageusement en continu, c'est-à-dire d'un seul tenant, depuis le premier tronçon d'extrémité 5, qui précède les spires hélicoïdales 7, jusqu'au second tronçon d'extrémité 6, qui vient à la suite des spires hélicoïdales 7, et ledit fil de tresse 4 réalise plusieurs tours complets en azimut autour de l'axe central Z3, chaque tour réalisé ayant pour effet d'ajouter une section unitaire dudit fil de tresse 4 à la section globale du tore tressé 3, tel que cela est notamment visible sur le détail partiel de la section illustrée à la figure 17.

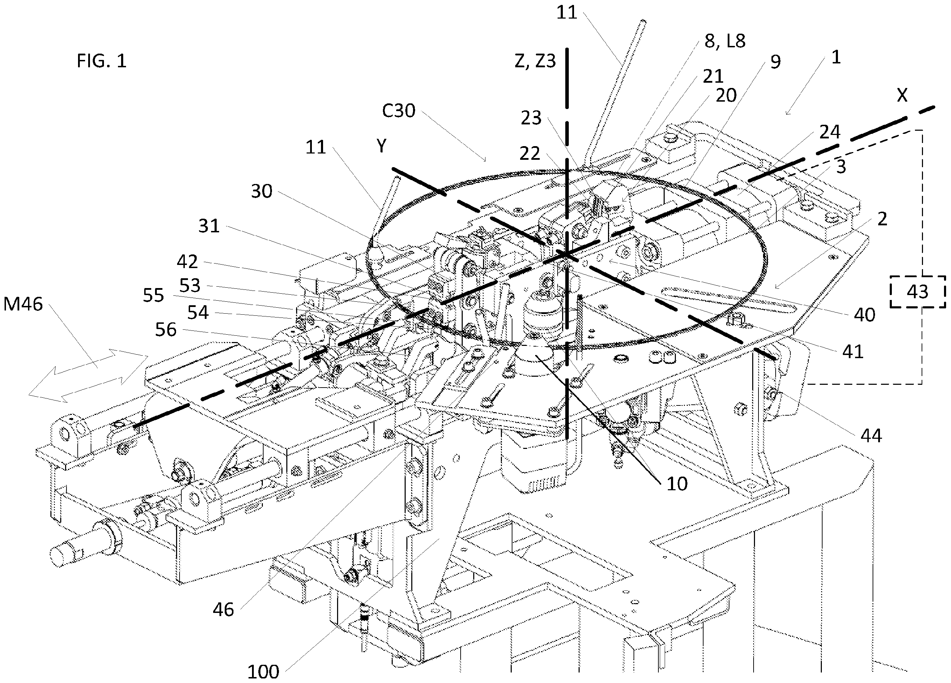

En pratique, la ligne génératrice L8, qui est représentée en traits mixte sur les figures 1, 5, 17 et 18, pourra de préférence être matérialisée par une âme 8 qui est fermée en anneau sur elle-même, de préférence sous une forme circulaire, autour de l'axe principal Z3.

Ladite âme 8 forme avantageusement un support de tressage, autour et le long duquel on enroule le fil de tresse 4 en spires hélicoïdales 7, tel que dit plus haut.

Ladite âme 8 peut-être monobrin, c'est-à-dire formée d'un seul fil d'âme monolithique, ou, en variante, multibrins, c'est-à-dire formée d'une pluralité de fils d'âme entrelacés.

L'âme 8, ou les fils d'âme, pourront être formés dans tout matériau approprié, suffisamment rigide et possédant une résistance à la rupture en traction supérieure à un seuil prédéterminé.

De préférence, l'âme 8, ou les fils d'âme, seront métalliques, par exemple en acier.

En variante, on pourrait toutefois utiliser un autre matériau, par exemple un polymère adéquat, ou un mélange de polymères adéquat, ou un composite métal-polymère, sans sortir du cadre de l'invention.

La table de réception 2 comprendra de préférence des organes de guidage 10, 11 tels que des galets 10 et/ou des tiges de centrage 11, permettant de positionner et guider le tore tressé 3 selon un chemin prédéterminé sur ladite table de réception 2. Par commodité de description, on pourra assimiler ce chemin à la ligne génératrice L8, et désigner comme « plan de guidage » le plan correspondant qui contient ladite ligne génératrice L8.

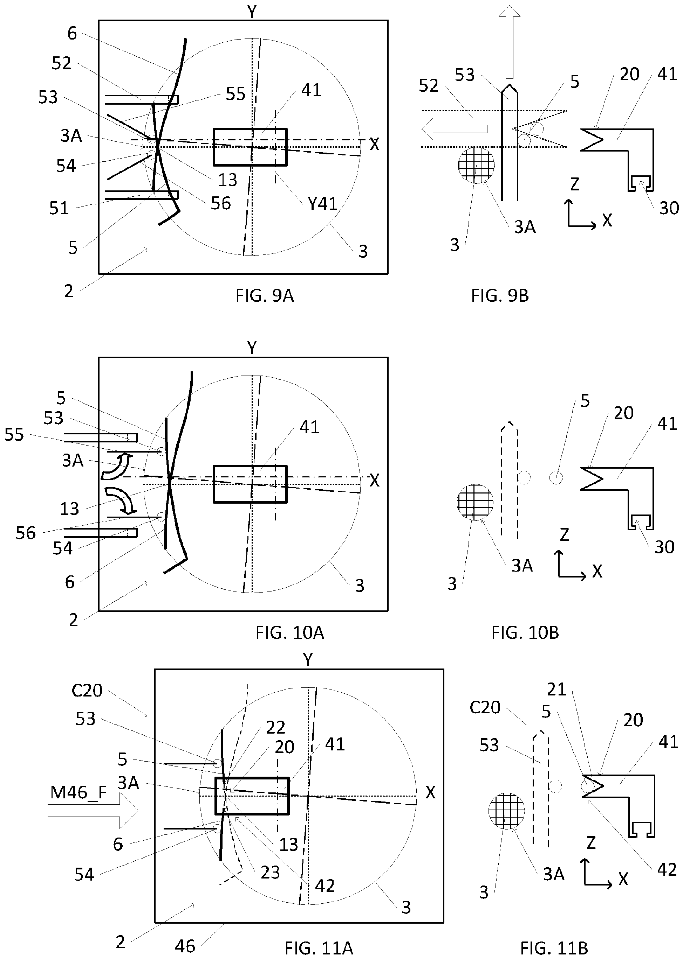

L'installation 1 comprend également un outil de coupe 20, agencé pour sectionner le premier tronçon d'extrémité 5 et le second d'extrémité 6 afin d'ajuster la longueur desdits premier et second tronçons d'extrémité 5, 6, tel que cela est illustré sur les figures 11A et 12A.

L'outil de coupe 20 permettra de conférer aux tronçons d'extrémité 5, 6 une longueur résiduelle prédéterminée, adaptée à la pose ultérieure d'un manchon 14.

Plus préférentiellement, on fera de préférence en sorte que, suite à l'opération de tressage, et avant l'opération de coupe, les tronçons d'extrémité 5, 6, se croisent initialement, en projection dans le plan de référence (X, Y), en un point de croisement 13, et que l'outil de coupe 20 ait pour effet de raccourcir les premier et second tronçons d'extrémité 5, 6 de part et d'autre dudit point de croisement 13, afin d'interrompre chaque tronçon d'extrémité 5, 6 avant qu'il n'atteigne ledit point de croisement, tel que cela est visible sur la figure 11A.

Ainsi, le manchon 14 pourra ensuite venir former un pont entre les premier et second tronçons d'extrémité 5, 6 sensiblement à l'emplacement où se trouvait le point de croisement 13, de sorte que lesdits tronçons d'extrémité 5, 6 soient finalement agencés dans le prolongement longitudinal l'un de l'autre, sans se chevaucher longitudinalement au sein du manchon 14. Ceci facilite l'opération de sertissage et améliore la compacité de la jonction par manchon.

De préférence, l'outil de coupe 20 comprend une pince de coupe 21.

Tel que cela est visible sur les figures 1, 11A et 19, ladite pince de coupe 21 peut de préférence comporter un premier jeu de couteaux 22 permettant de couper le premier tronçon d'extrémité 5 et un second jeu de couteaux 23 permettant de couper le second tronçon d'extrémité 6.

L'outil de coupe 20 comprendra bien entendu un mécanisme d'actionnement, de préférence automatique, pour activer la fermeture de la pince de coupe 21 afin de couper les tronçons d'extrémité 5, 6.

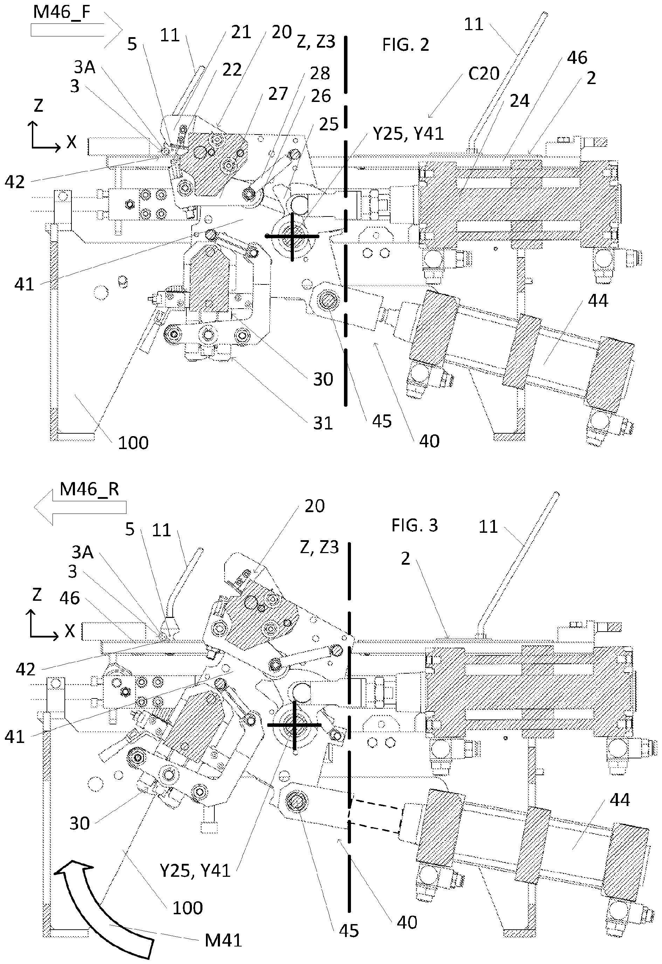

Tel que cela est illustré sur la figure 2, ce mécanisme comprendra de préférence un organe motorisé d'actionnement 24, tel qu'un vérin d'actionnement 24.

Ledit vérin d'actionnement 24 pourra par exemple être couplé à une came 25 qui coopère avec un galet d'actionnement 26 porté par un levier de coupe 27 qui, à l'encontre d'un ressort de rappel 28, entraîne en fermeture un jeu de couteaux 22, 23.

En l'espèce, la came 25 pourra être montée en rotation sur le bâti 100 autour d'un axe de came Y25 parallèle à l'axe des ordonnées Y, tandis que le vérin d'actionnement 24 est monté en pivot sur ce même bâti 100.

On notera que ce mécanisme de came, galet, levier de coupe et ressort de rappel pourra le cas échéant être dupliqué pour chaque jeu de couteaux 22, 23, de sorte que l'on puisse actionner chacun desdits jeux de couteaux de manière dissociée.

En effet, selon une caractéristique particulièrement préférentielle qui peut constituer une invention à part entière, la pince de coupe 21 possède une action différentielle, le second jeu de couteaux 23 étant à cet effet agencé de manière à entrer en action après que le premier jeu de couteaux 22 a terminé de couper le premier tronçon d'extrémité 5.

En d'autres termes, l'outil de coupe 20 est de préférence agencé pour couper les tronçons d'extrémité 5, 6 l'un après l'autre, et non pas simultanément.

A cette fin, on pourra prévoir un jeu de deux cames 25 décalées axialement, ici selon l'axe des ordonnées Y, et déphasées angulairement l'une par rapport à l'autre, pour actionner successivement deux leviers de coupe 27 associés chacun à l'un des jeux de couteaux 22, 23 et portant chacun un galet 26 engagé par l'une desdites deux cames 25. Chacun desdits leviers de coupe 27 sera de préférence rappelé indépendamment par son propre ressort de rappel 28.

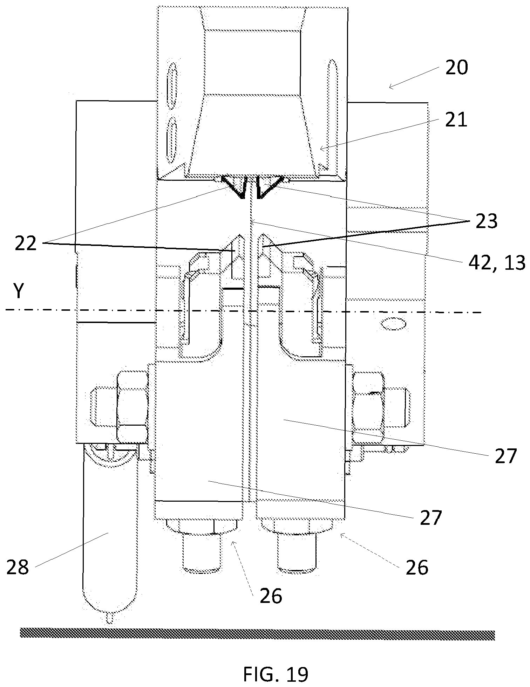

Une telle pince de coupe 21 comprenant deux jeux de couteaux 22, 23 répartis en ordonnées Y de part et d'autre du point de croisement 13, ainsi que deux leviers de coupe 27 correspondants, est illustrée sur la figure 19.

Avantageusement, un tel décalage temporel des deux opérations de coupe permet de concentrer, à chaque instant de l'opération de coupe, l'effort de coupe sur un seul tronçon d'extrémité 5, 6 à la fois, et par conséquent sur une seule section de fil de tresse 4.

De la sorte, on réduit l'effort de coupe nécessaire. Ainsi, l'opération de coupe requiert moins de puissance, ce qui permet avantageusement de réduire la taille de l'outil de coupe 20, du mécanisme d'actionnement, et de limiter l'usure de la pince de coupe 21.

L'installation 1 comprend également un outil de sertissage 30 agencé pour venir sertir un manchon 14 autour du premier tronçon d'extrémité 5 et du second tronçon d'extrémité 6 afin de réunir et fixer l'un à l'autre lesdits premier et second tronçons d'extrémité 5, 6.

Avantageusement, le sertissage d'un manchon 14 permet d'obtenir simplement, rapidement, et avec une faible consommation d'énergie, une jonction robuste des tronçons d'extrémité 5, 6, et plus particulièrement une jonction sans soudage desdits tronçons d'extrémité 5, 6. Cette jonction garantit la cohésion du tore tressé 3 en empêchant définitivement les spires hélicoïdales 7 de se dérouler ou de se relâcher.

De préférence, l'outil de sertissage 30 comprend une pince de sertissage 31 qui est agencée pour recevoir une préforme de manchon 12, puis pour venir appliquer et refermer par déformation plastique ladite préforme de manchon 12 en un manchon 14 autour des premier et second tronçons d'extrémité 5, 6.

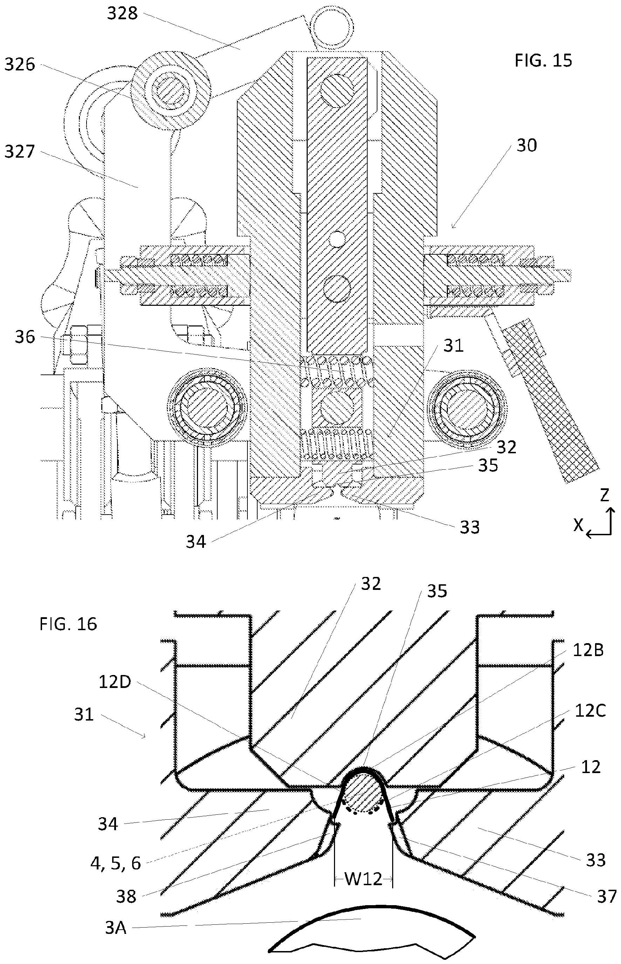

Ladite préforme de manchon 12 est de préférence fendue sur toute sa longueur, de sorte que ladite préforme de manchon présente, tel que cela est visible sur la figure 16, une section transverse incurvée concave en forme de U, qui comprend un fond 12B arrondi et deux branches latérales 12C, 12D évasées.

De préférence, la préforme de manchon 12 présente ainsi sur toute sa longueur une ouverture dont la largeur W12 est égale ou supérieure au plus grand diamètre du premier tronçon d'extrémité de fil 5 et du second tronçon d'extrémité de fil 6, tel que cela est schématisé sur la figure 16, de sorte que la pince de sertissage 31 peut venir appliquer la préforme de manchon 12 sur lesdits tronçons d'extrémité de fil 5, 6 par abord latéral, transversalement à la direction longitudinale desdits tronçons d'extrémité de fil 5, 6.

La préforme de manchon 12 forme ainsi en quelque sorte un manchon fendu, que la pince de sertissage 31 va pouvoir refermer et serrer sur les tronçons d'extrémité 5, 6 de fil 4 en rabattant les branches latérales 12C, 12D contre le périmètre de la section dudit fil 4, dans un secteur angulaire de ladite section du fil 4 qui est situé dans le demi-plan diamétralement opposé, par rapport au centre de la section du fil 4, au demi-plan qui contient le secteur angulaire du fil 4 contre lequel vient s'appliquer le fond 12B de la préforme de manchon 12.

Avantageusement, une telle approche latérale, transverse, est facile à mettre en oeuvre et aisément automatisable, notamment car elle dispense de devoir enfiler longitudinalement le manchon 14, et plus particulièrement la préforme de manchon 12, sur chacun des tronçons d'extrémité 5, 6.

En outre, les dimensions de la préforme de manchon 12, et plus particulièrement la longueur cumulée du fond 12B et des branches latérales 12C, 12D, sont avantageusement choisies de manière à ce que le manchon 14 qui résulte du pliage plastique de la préforme de manchon 12 sur elle-même enserre en son sein une seule section d'un fil 4, c'est-à-dire de manière à ce que le manchon 14 enveloppe une seule section de fil 4, et soit ainsi coaxial à chacun des tronçons d'extrémité 5, 6 unitaires dudit fil 4.

Ainsi, en particulier, dans le cas d'un tore tressé 3, qui comprend dans une même section droite de tore, plusieurs sections unitaires du fil de tresse 4 correspondant chacune à une spire 7 hélicoïdale, alors les dimensions de la préforme de manchon 12, et plus particulièrement la longueur cumulée du fond 12B et des branches latérales 12C, 12D de ladite préforme de manchon 12, c'est-à-dire la longueur d'arc que ladite préforme de manchon 12 peut couvrir autour de la direction longitudinale du fil de tresse 4 lorsque ladite préforme de manchon a été pliée sous sa forme définitive de manchon 14, correspondent de préférence à une fraction, typiquement 65 % à 100%, de préférence 70% à 99%, voire 75% à 95%, du périmètre d'une seule section unitaire du fil de tresse 4, de sorte que le manchon 14 contient finalement une seule section unitaire de fil de tresse 4, les autres sections unitaires du fil de tresse 4 appartenant à la même section droite du tore tressé 3 se trouvant hors du manchon 14, tel que cela est notamment visible sur la figure 5.

En d'autres termes, le manchon 14 sera de préférence dimensionné de sorte à ne pas envelopper l'ensemble de la section du tore tressé 3, c'est-à-dire à ne pas envelopper l'ensemble des spires 7 du fil de tresse 4, mais seulement la section unitaire qui correspond à la jonction entre le premier et le second tronçon d'extrémité 5, 6.

On évite ainsi avantageusement de créer une surépaisseur de matière sur la tringle 9, et plus particulièrement sur la surface radialement externe de la tringle 9, ce qui permet à ladite tringle 9 de ne pas présenter de caractère abrasif vis-à-vis des nappes à base de caoutchouc, notamment la nappe carcasse, qui constituent l'enveloppe du bandage pneumatique.

On notera également que, de préférence, une fois la préforme de manchon 12 refermée en un manchon 14 sur les tronçons d'extrémité 5, 6, et plus particulièrement sur une section unitaire du fil de tresse 4 correspondant à la section desdits tronçons d'extrémité 5, 6, les branches latérales 12C, 12D ne se chevauchent pas et de préférence ne se touchent pas bord à bord, c'est-à-dire que le manchon 14 couvre moins de 100% de la circonférence de la section du fil 4. On évite ainsi de créer des surépaisseurs inutiles de matière.

A titre indicatif, la largeur frontale du ruban, de préférence métallique, constitutif de la préforme de manchon 12, c'est-à-dire la longueur cumulée du fond 12B et des banches latérales 12C, 12D, considérée dans une section droite de la préforme de manchon 12 perpendiculaire à la direction longitudinale de ladite préforme de manchon 12, sera de préférence comprise entre 4 mm et 7 mm, afin de couvrir typiquement, comme indiqué plus haut, entre 70% et 99% de la circonférence d'une section (unitaire) de fil 4.

Tel que cela est visible notamment sur les figures 15 et 16, la pince de sertissage 31 peut comprendre une pluralité de mors 32, 33, 34, comprenant un mors de fond 32 agencé pour recevoir, de préférence dans un logement arrondi 35, le fond 12B de la préforme de manchon 12, ainsi qu'un premier mors latéral 33 et un second mors latéral 34.

Le premier mors latéral 33 et le second mors latéral 34 sont agencés pour venir en prise respectivement avec la première branche latérale 12C et avec la seconde branche latérale 12D de la préforme de manchon 12, et pour se rapprocher l'un de l'autre, transversalement à la ligne moyenne du fil 4, de manière à rabattre l'une vers l'autre, par déformation plastique, ladite première branche latérale 12C et ladite seconde branche latérale 12D de la préforme de manchon 12, afin de refermer de manière enveloppante ladite préforme de manchon 12 sur la section dudit fil 4, et emprisonner ainsi les tronçons d'extrémité 5, 6 à l'intérieur du manchon 14.

Les mors latéraux 33, 34 pourront présenter toute forme et toute cinématique permettant d'accentuer la courbure, ici la concavité, de la préforme de manchon 12, par déformation plastique à l'encontre du fil 4, pour obtenir le manchon 14 fini.

Afin d'assurer le maintien de la préforme de manchon 12 au sein de la pince de sertissage 31 jusqu'à l'engagement de ladite pince de sertissage 31 sur le fil 4, les mors latéraux 33, 34 pourront être précontraints élastiquement l'un vers l'autre au moyen d'un ou plusieurs ressorts de suspension 36, et présenter des rebords anti-retour 37, 38 aptes à coopérer avec la préforme de manchon 12 par encliquetage, tel que cela est illustré sur la figure 16.

De préférence, la préforme de manchon 12 reposera de façon stable contre lesdits rebords anti-retour 37, 38 par les extrémités libres de ses branches latérales 12C, 12D, ce qui évitera toute chute de ladite préforme de manchon 12.

Bien entendu, on effectuera, lors de l'opération de sertissage, tout d'abord une fermeture de la pince de sertissage 31 par un rapprochement forcé des mors latéraux 33, 34, pour provoquer le sertissage du manchon 14, puis ensuite, une fois le manchon 14 effectivement serti sur le fil 4, une ouverture de la pince de sertissage 31 par écartement des mors latéraux 33, 34, par simple effet de retour élastique ou bien par une manoeuvre motorisée forcée, afin de libérer les tronçons d'extrémité 5, 6 désormais réunis par ledit manchon 14.

Les mouvements forcés des mors latéraux 33, 34, notamment en fermeture, pourront être effectués, le cas échéant à l'encontre du ressort de suspension 36, par tout organe de motorisation approprié, tel qu'un vérin d'actionnement 24 ou un moteur électrique.

En particulier, de manière analogue à ce qui a été décrit pour la pince de coupe 21, la pince de sertissage 31 pourra être actionnée par un mécanisme d'actionnement comprenant une came 325, mue en rotation par un organe d'actionnement motorisé 24, tel qu'un vérin d'actionnement 24, laquelle came 325 coopère avec un galet d'actionnement 326 porté par un levier de sertissage 327 qui agit sur le mors 33, 34 considéré, à l'encontre d'un ressort de rappel 328, pour fermer la pince de sertissage 31.

On notera que, selon une caractéristique préférentielle qui peut constituer une invention à part entière, l'outil de coupe 20 et l'outil de sertissage 30 peuvent partager un mécanisme d'actionnement commun, et notamment un même vérin d'actionnement 24, ce qui permet à l'installation 1 de gagner en compacité.

A ce titre, la came 325 qui commande la fermeture de la pince de sertissage 31 pourra avantageusement être montée sur le même axe de rotation Y25 que la came 25 qui commande la fermeture de la pince de coupe 20, tel que cela est visible sur les figures 2 et 4. Les deux cames 25, 325 pourront même de préférence être solidaires l'une de l'autre en rotation, sur ledit axe de rotation Y25.

Selon l'invention, l'installation 1 comprend une unité de configuration 40 qui est agencée pour faire passer automatiquement ladite installation 1 d'une première configuration de travail, dite « configuration de coupe » C20, correspondant aux figures 2, 11A et 11B, dans laquelle la table de réception 2 coopère avec l'outil de coupe 20 de manière à positionner le tore tressé 3 et les premier et second tronçons d'extrémité 5, 6 pour que lesdits premier et second tronçons d'extrémité 5, 6 soient sectionnés par l'outil de coupe 20, à une seconde configuration de travail, dite « configuration de sertissage » C30, distincte de la première configuration de travail C20, qui correspond aux figures 1, 4, 13A et 13B, et dans laquelle la table de réception 2 coopère avec l'outil de sertissage 30 de manière à positionner le tore tressé 3 et les premier et second tronçons d'extrémité 5, 6 pour que l'outil de sertissage 30 réunisse lesdits premier et second tronçons d'extrémité 5, 6 au moyen du manchon 14.

Avantageusement, l'unité de configuration 40, de préférence pilotée par un système de commande 43 électronique, qui pilote de préférence également l'actionnement des outils de coupe 20 et de sertissage 30, permet d'enchaîner automatiquement, pour chaque tore tressé 3, l'opération de coupe puis l'opération de sertissage, sans perte de référence machine. L'installation 1 peut donc réaliser ces opérations de manière autonome, avec précision, rapidité, et de manière parfaitement reproductible d'un tore tressé 3 à l'autre.

L'unité de configuration 40 sera notamment capable de gérer aussi bien les déplacements de positionnement de la table de réception 2, et donc le positionnement du tore tressé 3, par rapport au bâti 100, que les éventuels déplacements des outils de coupe 20 puis de sertissage 30 par rapport à ce même bâti 100. L'unité de configuration permettra ainsi de positionner finement et de manière reproductible la table de réception 2, et donc le tore tressé 3, par rapport aux outils de coupe 20 et de sertissage 30, et ce dans un référentiel bien maîtrisé, attaché au bâti 100.

Plus particulièrement, l'unité de configuration 40 sera agencée pour amener, en configuration de coupe C20, le tore tressé 3, et plus particulièrement le secteur angulaire dudit tore tressé qui contient le point de croisement 13 des premier et second tronçons d'extrémité 5, 6, en vis-à-vis de l'outil de coupe 20, de telle sorte que les premier et second tronçons d'extrémité 5, 6 se positionnent dans la pince de coupe 21, et que les deux jeux de couteaux 22, 23 se retrouvent ainsi de part et d'autre du point de croisement 13 desdits tronçons d'extrémité 5, 6.

De même, l'unité de configuration 40 sera agencée pour effecteur les transferts nécessaires, par rapport au bâti 100, pour amener ensuite, en configuration de sertissage C30, le tore tressé 3, et plus particulièrement les premier et second tronçons d'extrémité 5, 6 raccourcis par l'opération de coupe, en vis-à-vis de l'outil de sertissage 30, de manière à engager lesdits tronçons d'extrémité 5, 6 entre les mors 32, 33, 34 de la pince de sertissage 31, dans la préforme de manchon 12 présente dans ladite pince de sertissage 31.

Comme indiqué plus haut, l'installation comprend un bâti 100 auquel on associe un repère dit « repère fixe » (X, Y, Z).

Dans l'absolu, on pourrait envisager de répartir les outils de coupe 20 et de sertissage 30 sur le bâti de sorte à définir respectivement un emplacement de coupe et un emplacement de sertissage distinct de l'emplacement de coupe, et de prévoir que l'unité de configuration 40 déplace automatiquement le tore tressé 3 d'un emplacement à l'autre.

Toutefois, de préférence, et tel que cela est visible sur les figures 3 et 12B, l'unité de configuration 40 comprend une tête de permutation 41 qui porte à la fois l'outil de coupe 20 et l'outil de sertissage 30, et qui est agencée de manière à pouvoir positionner alternativement, par un premier mouvement M41 dit « mouvement de permutation » effectué par rapport au bâti 100, ledit outil de coupe 20, pour la configuration de coupe C20, et respectivement ledit outil de sertissage 30, pour la configuration de sertissage C30, en vis-à-vis d'un même emplacement de travail 42 commun, qui est prédéterminé dans le repère fixe (X, Y, Z) de l'installation 1.

Ainsi, pour le tore tressé 3, l'emplacement de coupe et l'emplacement de sertissage sont identiques, et correspondent à l'emplacement de travail 42 unique auquel se présentent successivement, grâce au mouvement de permutation 41, l'outil de coupe 20 puis l'outil de sertissage 30.

L'utilisation d'une tête de permutation 41 permet notamment de réduire significativement l'encombrement de l'installation 1, ainsi que le temps de cycle nécessaire au passage de la configuration de coupe C20 à la configuration de sertissage 30 (puis, inversement, au retour de la configuration de sertissage 30 à la configuration de coupe C20).

En outre, une telle tête de permutation 41 permet, comme on le verra par la suite, d'opérer le changement de configuration au moyen d'une combinaison de mouvements simples et bien contrôlés, dont l'amplitude et l'inertie sont modérées, et que l'on peut guider avec précision, en limitant ainsi les sources d'erreurs liées aux jeux mécaniques, et en conservant une référence commune dans le repère fixe du bâti 100. L'installation gagne ainsi en précision, en fiabilité et en compacité.

De préférence, tel que cela est visible sur la figure 3, le mouvement de permutation M41 s'effectue par basculement de la tête de permutation 41 autour d'un axe de basculement Y41 qui est parallèle au plan de référence (X, Y), ici horizontal, du bâti 100.

Plus particulièrement, ledit axe de basculement 41 sera parallèle à l'axe des ordonnées Y, et de préférence situé en-dessous du plan de la table de réception 2.

Avantageusement, l'utilisation d'une tête de permutation 41 basculante permet de réaliser le mouvement de permutation 41 dans un espace réduit, et de façon particulièrement simple.

De préférence, le mouvement de permutation M41 correspondra à un quart de tour.

On pourra bien entendu utiliser des butées de fin de course pour indexer les deux positions qui correspondent respectivement à la configuration de coupe C20 et à la configuration de sertissage C30.

Avantageusement, la tête de permutation 41 pourra présenter un agencement sensiblement en L, l'une des branches du L portant l'outil de coupe 20, et l'autre branche portant l'outil de sertissage 30.

Une telle disposition orthogonale des outils 20, 30 sera parfaitement adaptée à un mouvement de permutation M41 par quart de tour, et permettra en outre de dégager la pince de sertissage 31 vers le bas, sous le plan du tore tressé 3 et sous la table de réception 2, pour faciliter le réapprovisionnement de ladite pince de sertissage 30 par une nouvelle préforme de manchon 12, en temps masqué entre deux opérations de sertissage effectuées sur deux tores tressés 3 successifs.

Le mouvement de permutation M41 pourra être réalisé par tout organe moteur approprié, par exemple au moyen d'un vérin de permutation 44, tel que cela est illustré sur les figures 2 à 4. Ledit vérin de permutation 44 sera de préférence distinct du vérin d'actionnement 24 chargé d'actionner la fermeture des pinces de coupe 21, respectivement de sertissage 31.

De préférence, la tige dudit vérin de permutation 44 pourra s'articuler au moyen d'un maneton 45 sur une portion de la tête de permutation 41 qui forme une manivelle par rapport à l'axe de basculement Y41.

Selon une caractéristique préférentielle qui peut constituer une invention à part entière, l'installation 1 peut comprendre un mécanisme d'actionnement 24, 25, 325 partagé, ici motorisé par un même vérin d'actionnement 24, ledit mécanisme d'actionnement étant agencé de manière à commander sélectivement, selon que l'installation 1 se trouve en configuration de coupe C20 ou au contraire en configuration de sertissage C30, soit l'actionnement en fermeture de l'outil de coupe 20, ici de la pince de coupe 21, soit, respectivement, l'actionnement en fermeture de l'outil de sertissage 30, ici de la pince de sertissage 30.

Ainsi, avantageusement, on pourra utiliser un seul et même mécanisme d'actionnement pour chacune de ces opérations de coupe puis de sertissage.

Le mouvement de permutation M41 de la tête de permutation 41 permettra avantageusement non seulement de positionner l'outil 20, 30 adapté en vis-à-vis du tore tressé 3, et des tronçons d'extrémité 5, 6, mais en outre d'associer en conséquence sélectivement ledit outil 20, 30 au mécanisme d'actionnement.

A ce titre, l'axe Y25 de rotation des cames, commun à la came 25 de fermeture de la pince de coupe 21 et à la came 325 de fermeture de la pince de sertissage 31, sera de préférence confondu avec l'axe de basculement Y41 de la tête de permutation.

Ainsi, la position dudit axe de rotation des cames Y25 sera invariante lors du mouvement de permutation M41, si bien qu'un même vérin d'actionnement 24 pourra être utilisé pour entraîner solidairement en rotation les différentes cames 25, 325, formant un même sous-ensemble de cames 25, 325.

Les leviers de coupe 27 et de sertissage 327, et leurs galets 26, 326 respectifs seront agencés sur la tête de permutation 41 de manière à pouvoir se présenter alternativement en vis-à-vis des cames 25, 325, selon la configuration C20, C30 choisie.

Ainsi, en configuration de coupe C20, le mouvement rotatif du sous-ensemble de cames 25, 325 commandé par le vérin d'actionnement 24 se transmettra au galet 26 associé à la pince de coupe 21, via la came 25 de fermeture de la pince de coupe, mais restera sans effet sur la pince de sertissage 31, du fait que la came 325 correspondante tourne dans le vide, sans pouvoir interférer avec le galet 326 associé à la pince de sertissage 31.

A l'inverse, en configuration de sertissage C30, le mouvement rotatif du sous-ensemble de cames 25, 325 commandé par le vérin d'actionnement 24 se transmettra au galet 326 associé à la pince de sertissage 31, via la came 325, mais restera sans effet sur la pince de coupe 21.

L'installation 1 présente ainsi une cinématique optimisée et particulièrement compacte.

De préférence, l'unité de configuration 40 comprend un chariot 46 qui porte la table de réception 2 et qui est monté mobile selon un second mouvement, dit « mouvement d'engagement/dégagement » M46, distinct du mouvement de permutation M41, qui permet alternativement i/ d'amener le tore tressé 3 à l'emplacement de travail 42 commun, pour permettre l'interaction entre le tore tressé 3 et l'outil de coupe 20 en configuration de coupe C20, respectivement l'interaction entre le tore tressé 3 et l'outil de sertissage 30 en configuration de sertissage C30, et ii/ d'éloigner le tore tressé 3 dudit emplacement de travail 42 commun lorsque la tête de permutation 41 doit opérer le mouvement de permutation M41.

Avantageusement, la table de réception 2 est ainsi escamotable, afin de dégager l'espace nécessaire au mouvement de permutation M41, et ainsi d'éviter à la table de réception 2 et au tore tressé 3 d'interférer avec la tête de permutation 41 lors du basculement de cette dernière.

Le chariot 46 et la tête de permutation suivront à cet effet des trajectoires distinctes, permettant leurs mouvements M41, M46 de va-et-vient respectifs lors des phases de reconfiguration de l'installation 1.

On pourra ainsi passer aisément d'une configuration C20 à l'autre configuration 30, et réciproquement, par une combinaison de mouvements M41, M46 séparés et coordonnés, relativement simples, faciles à guider, et réalisables dans un volume compact.

De préférence, le mouvement d'engagement/dégagement M46 s'effectue en translation parallèlement au plan de référence (X, Y) du bâti 100, et plus préférentiellement parallèlement à l'axe des abscisses X.

Ainsi, le chariot se déplace de préférence transversalement à l'axe de référence Z, et donc transversalement à l'axe Z3 du tore tressé 3, ce qui permet de préférence d'approcher le tore tressé de l'emplacement de travail 42 par un mouvement d'avance M46_F centripète, et de l'éloigner par un mouvement de recul M46_R centrifuge.

Ici encore, on pourra guider de façon précise et fiable ce mouvement de translation horizontale M46.

Bien entendu, l'unité de configuration 40 pourra être pourvue à cet effet de tous les organes de guidage et de motorisation appropriés, pilotés par le système de commande 43.

De préférence, la tête de permutation 41 est disposée à l'intérieur du périmètre du tore tressé 3.

Ainsi, la tête de permutation 41 est avantageusement contenue, lorsque le tore tressé 3 est en place sur la table de réception 2, et ce que l'on se trouve en configuration de coupe C20 ou en configuration de sertissage C30, ou dans toute configuration de transition intermédiaire, dans une enveloppe cylindrique qui est centrée sur l'axe central Z3 et délimitée radialement par la face radialement interne du tore tressé 3.

Avantageusement, un tel agencement favorise la compacité de l'installation 1.

Un tel agencement favorise en outre un accès des pinces de coupe 21 et de sertissage 31 aux tronçons d'extrémité 5, 6 par abord radial interne, sensiblement à l'horizontale, dans le plan du tore tressé 3.

Un tel agencement permet de surcroît de disposer d'autres organes de l'installation 1, notamment des organes de motorisation du chariot 46, ou les organes de motorisation d'organes écarteurs (tels que détaillés ci-après) à l'extérieur du périmètre du tore tressé 3. On peut ainsi avantageusement exploiter tout l'espace disponible au sein de l'installation 1.

Par ailleurs, l'unité de configuration 40 comprend de préférence des organes écarteurs 51, 52, 53, 54 agencés pour engager les premier et second tronçons d'extrémité 5, 6 afin de faire saillir lesdits premier et second tronçons d'extrémité 5, 6 par rapport au corps 3A du tore tressé formé par les spires hélicoïdales 7, en ménageant ainsi un passage entre lesdits tronçons d'extrémité 5, 6 et le corps 3A du tore tressé 3, de manière à rendre lesdits premier et second tronçons d'extrémité 5, 6 accessibles à l'outil de coupe 20, respectivement à l'outil de sertissage 30.

Avantageusement, la mise en saillie des tronçons d'extrémité 5, 6 permet d'éloigner lesdits tronçons d'extrémité 5, 6 de la surface du corps 3A du tore tressé, formé par la superposition des spires hélicoïdales 7, et plus particulièrement de décoller lesdits tronçons d'extrémité 5, 6 de la surface dudit corps 3A du tore tressé contre laquelle lesdits tronçons d'extrémité 5, 6 reposent initialement, et ce de manière suffisante pour permettre aux outils de coupe 20 et de sertissage 30 de distinguer les tronçon d'extrémité 5, 6 du reste du tore tressé 3, et donc d'agir exclusivement sur lesdits tronçons d'extrémité 5, 6.

De préférence, la flexion des tronçons d'extrémité 5, 6 provoquée par l'action des organes écarteurs 51, 52, 53, 54, sera strictement élastique, en ceci que les contraintes générées par cette action dans le fil de tresse 4 ne dépasseront pas la limite d'élasticité à 0,2% d'allongement résiduel, dite usuellement « Rp0,2 », du matériau constitutif du fil de tresse 4, et ce de manière à ne pas causer de déformation permanente des tronçons d'extrémité 5, 6, et ainsi autoriser un retour élastique desdits tronçons d'extrémité 5, 6, et du manchon 14, contre le corps 3A du tore tressé après l'opération de sertissage, tel que cela est visible sur la figure 5.

On notera également que la mise en saillie simultanée des tronçons d'extrémité 5, 6 est avantageusement réalisée de telle manière que le premier tronçon d'extrémité 5 et le second tronçon d'extrémité 6 se croisent en un point de croisement 13, qui se trouve ainsi décalé à distance du corps du tore tressé 3A, du fait du fléchissement élastique des tronçons d'extrémité 5, 6 sous l'action des organes écarteurs.

Plus préférentiellement, les tronçons d'extrémité 5, 6 seront de préférence fléchis en saillie vers l'intérieur du tore 3, c'est-à-dire en rapprochement de l'axe central Z3, par les organes écarteurs 51, 52, 53, 54, de telle sorte que, dans un plan de projection normal à l'axe central Z3, et/ou dans le plan de référence (X, Y), le point de croisement 13 qui résulte de la mise en saillie se trouvera radialement plus proche dudit axe central Z3 que la surface radialement interne du corps du tore tressé 3A formé par les spires hélicoïdales 7.

Un tel choix permet notamment de disposer par la suite le manchon 14 sur la face radialement interne du tore tressé 3, tel que cela est notamment visible sur la figure 5, ce qui évite que le manchon 14 ne provoque, en fonctionnement, une usure prématurée des nappes de renfort du bandage pneumatique, et plus particulièrement de la nappe carcasse dudit bandage pneumatique, par abrasion.

En pratique, l'opération de coupe puis l'opération de sertissage devront être effectuées dans un secteur angulaire, considéré en azimut autour de l'axe central Z3, et plus globalement autour de l'axe vertical de référence Z, qui contient le point de croisement 13, et de préférence qui est sensiblement voire exactement centré sur le point de croisement 13.

L'emplacement de travail 42 commun à l'outil de coupe 20 et à l'outil de sertissage 30, le mouvement de permutation M41 de la tête de permutation 41, ainsi que la trajectoire du chariot 46 permettant à la table de réception 2 de réaliser ses mouvements d'engagement M46_F et de dégagement M46_R, seront donc définis de manière à positionner le point de croisement 13 des tronçons d'extrémité 5, 6 au sein dudit emplacement de travail 42, et plus particulièrement de manière à positionner successivement le point de croisement 13 à l'intérieur de la pince de coupe 21 (figure 11A), puis à l'intérieur de la pince de sertissage 31 (figure 13A).

De préférence, les organes écarteurs 51, 52, 53, 54 comprennent des doigts de retenue 53, 54 qui sont embarqués sur le chariot 46 de sorte à pouvoir maintenir les premier et second tronçons d'extrémité 5, 6 en position saillante par rapport au corps 3A du tore tressé 3 aussi bien dans les configurations de travail C20, C30 que lors des mouvements d'engagement/dégagement M46.

On pourra ainsi avantageusement définir une configuration saillante des tronçons d'extrémité 5, 6 que l'on pourra sensiblement conserver, et donc utiliser comme référence, aussi bien pour l'opération de coupe qu'ensuite pour l'opération de sertissage.

On notera que, de préférence, l'installation 1 comprend deux jeux d'organes écarteurs.

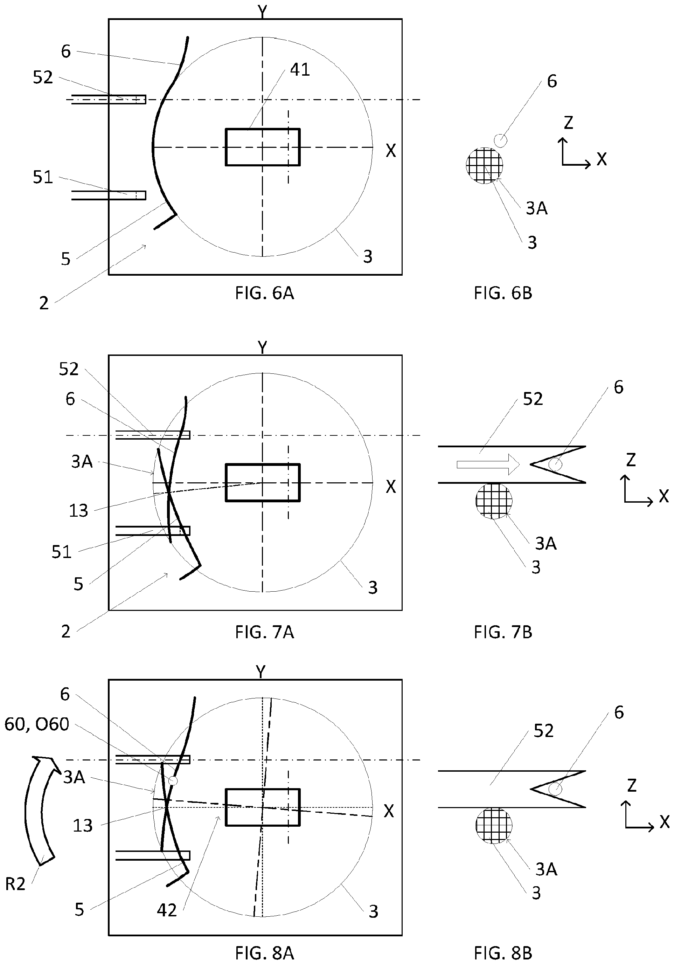

Un premier jeu d'organes écarteurs 51, 52 comprend des palettes 51, 52, qui permettent de réaliser une mise en saillie initiale des tronçons d'extrémité 5, 6 par rapport au corps 3A du tore tressé 3 (figures 7A, 7B), et de maintenir lesdits tronçons d'extrémité 5, 6 en saillie pendant que la table de réception 2 effectue un mouvement de rotation azimutale R2, autour de l'axe de référence Z (ou, de manière sensiblement équivalente, autour de l'axe central Z3), afin d'orienter en azimut le tore tressé 3 par rapport à l'emplacement de travail 42.

Plus particulièrement, ce mouvement de rotation azimutale R2 permettra de réaliser une prise de référence en détectant le passage de l'un des tronçons d'extrémité 5, 6 saillants par un point de repérage 060 associé au bâti 100, au moyen d'un capteur 60 approprié, tel qu'un capteur optique 60 dont le faisceau matérialise le point de repérage 060, tel que cela est illustré sur la figure 8A.

Les palettes 51, 52 seront bien entendu agencées pour pouvoir se glisser chacune entre le corps du tore tressé 3 et le tronçon d'extrémité 5, 6 qui leur est affecté, afin de capturer ledit tronçon d'extrémité 5, 6 (figures 7A, 7B), et pour pouvoir guider le glissement dudit tronçon d'extrémité 5, 6 sur lesdites palettes 51, 52 pendant la rotation azimutale R2, sans laisser échapper ledit tronçon d'extrémité 5, 6 (figures 8A, 8B).

Les palettes 51, 52 seront de préférence embarquées sur le chariot 46 et montées mobiles en translation par rapport à la table de réception 2, parallèlement au plan de référence (X, Y) et plus préférentiellement parallèlement à l'axe des abscisses X, pour pouvoir engager les premier et second tronçons d'extrémité 5, 6 par abord latéral centripète.

De préférence, les doigts de retenue 53, 54 formeront un second jeu d'organes écarteurs qui se substitueront aux palettes 51, 52, afin de pouvoir maintenir les tronçons d'extrémité 5, 6 dans une position saillante par rapport au corps du tore tressé 3, en fournissant auxdits tronçons d'extrémité 5, 6 des appuis qui sont plus proches du point de croisement 13 que ne l'étaient les appuis procurés par les palettes 51, 52, et qui subsistent avantageusement pendant et après l'opération de coupe, jusqu'à l'opération de sertissage.

Avantageusement, les doigts de retenue 53, 54 occuperont en outre un espace plus restreint que les palettes 51, 52, ce qui facilitera l'accès des outils de coupe 20 puis de sertissage 30 aux premier et second tronçons d'extrémité 5, 6.

Les doigts de retenue seront de préférence mobiles selon au moins une composante de mouvement parallèle à l'axe vertical Z, et donc de préférence sensiblement parallèle à l'axe central Z3 du tore tressé 3, ce qui permettra auxdits doigts de retenue 53, 54 de traverser le plan du tore et d'engager les tronçons d'extrémité 5, 6 en s'insérant, par un mouvement de pénétration axiale, dans l'espace compris entre les palettes 51, 52, entre le corps 3A du tore tressé et le point de croisement 13, tel que ledit espace a été ouvert par les palettes 51, 52, ainsi que cela est illustré sur les figures 9A et 9B.

Une fois que les doigts de retenue 53, 54 auront engagé chacun leur tronçon d'extrémité 5, 6 respectif, les palettes 51, 52, avantageusement escamotables, seront de préférence déplacées automatiquement en retrait, ici en translation centrifuge par rapport à l'axe central Z3, selon un mouvement de recul parallèle à l'axe des abscisses X.

Les doigts de retenue seront de préférence portés par des bras 55, 56, qui pourront préférentiellement être montés en rotation de lacet, selon des axes de lacet parallèles à l'axe vertical Z, de sorte à pouvoir opérer, après l'engagement des doigts de retenue 53, 54 au contact des tronçons d'extrémité 5, 6, un déploiement des doigts de retenue 53, 54 par une ouverture angulaire en lacet, tel que cela est illustré sur la figure 10A.

Par ce mouvement de déploiement en lacet, les doigts de retenue 53, 54 s'écartent l'un de l'autre, et s'écartent chacun du point de croisement 13, tout en restant au contact, et en glissant le long, de leur tronçon d'extrémité 5, 6 respectif, de sorte à remonter le long dudit tronçon d'extrémité vers la portion du fil 4 qui rattache ledit tronçon d'extrémité 5, 6 au tore tressé 3.

Ce faisant, les doigts de retenue 53, 54, tout en maintenant, voire en accentuant, la flexion desdits tronçons d'extrémité 5, 6, et donc le caractère saillant de ces derniers, dégagent avantageusement un espace libre dans un secteur angulaire du tore 3 qui contient le point de croisement 13, ce qui autorise et favorise l'accès des outils de coupe 20 puis de sertissage 30 aux tronçons d'extrémité 5, 6, au voisinage dudit point de croisement 13.

Tel que cela est visible sur la figure 17, le tore tressé 3 s'étend axialement entre un premier plan fictif, dit « premier plan de base » P1, transverse à l'axe central Z3 et tangent à une première face dudit tore tressé 3, et un second plan fictif, dit « second plan de base » P2, transverse à l'axe central Z3 et tangent à une seconde face du tore tressé 3 axialement située à l'opposé de la première face par rapport à la ligne génératrice L8 du tore tressé.

Par commodité de description géométrique, on pourra considérer que le premier et le second plan de base P1, P2 sont normaux à l'axe central Z3.

Selon une caractéristique préférentielle qui peut constituer une invention à part entière, applicable à toute installation de manchonnage d'un tore tressé 3, la table de réception 2, le cas échéant l'outil de coupe 20 s'il est intégré à l'installation, et l'outil de sertissage 30, sont agencés de manière à mettre le manchon 14 en place systématiquement sur la face radialement interne du tore tressé 3, orientée vers l'axe central Z3, dans un espace qui est strictement contenu axialement entre le premier plan de base P1 et le second plan de base P2, et radialement contenu à l'intérieur de la ligne génératrice L8 du tore tressé 3, c'est-à-dire situé radialement à une distance de l'axe central Z3 inférieure au rayon R8 de ladite ligne génératrice L8, tel que cela est visible sur les figures 5, 17 et 18.

A ce titre, on fera en sorte que d'une part les tronçons d'extrémité 5, 6, suite à l'opération de tressage, se croisent initialement en un point de croisement 13 situé à l'intérieur du périmètre du tore tressé 3, du côté de la face radialement interne dudit tore tressé, que d'autre part l'opération de coupe intervienne par l'intérieur du tore tressé, dans un secteur angulaire du tore qui contient ledit point de croisement 13 et de préférence qui est centré sur ledit point de croisement, de sorte à raccourcir les premier et second tronçons d'extrémité de part et d'autre dudit point de croisement 13 afin d'interrompre chaque tronçon d'extrémité 5, 6 avant qu'il n'atteigne ledit point de croisement, puis enfin que la mise en place du manchon 14 soit réalisée dans ce même secteur angulaire, pour former un pont entre les premier et second tronçons d'extrémité sensiblement à l'emplacement où se trouvait le point de croisement 13.

On notera qu'une telle caractéristique relative au positionnement du manchon 14 sur la surface radialement interne du tore tressé 3 est applicable à toute installation de fabrication de tringle 9 comprenant au moins une table de réception 2 et un outil de sertissage 30, ou plus globalement applicable à toute installation de sertissage utilisant un outil de sertissage 30 permettant de sertir un manchon 14 pour réunir lesdits deux tronçons d'extrémité 5, 6 d'un fil 4 fermé sur lui-même au sein d'un tore tressé 3 afin d'assurer la cohésion dudit tore tressé 3.

Dans tous les cas, en plaçant le manchon 14 exclusivement sur la face radialement interne du tore tressé, sans que ledit manchon ne déborde ou s'étende en saillie axiale sur les flancs du tore tressé ou en saillie radiale externe sur la face radialement externe du tore tressé, et plus particulièrement en saillie radiale externe sur la ligne équatoriale externe dudit tore tressé, on s'assure avantageusement que, une fois la tringle 9 intégrée au bandage pneumatique, le manchon 14 ne vient pas blesser ou endommager par abrasion les éléments de structure et de renfort de l'enveloppe dudit bandage pneumatique, telles que la nappe carcasse dudit pneumatique.

Ce faisant, on améliore donc la qualité et robustesse dudit bandage pneumatique.

Bien entendu, la pose du manchon 14 par abord radial interne sur le tore tressé 3 est facilitée par le fait de placer l'outil de coupe 20 et l'outil de sertissage 30 à l'intérieur du périmètre délimité par le tore tressé 3 comme indiqué ci-dessus, et plus particulièrement de prévoir une tête de permutation 41 basculante située à l'intérieur dudit tore tressé 3 et qui amène les pinces 21, 31 desdits outils 20, 30 ouvertes en vis-à-vis de la face radialement interne dudit tore tressé 3, dans un plan horizontal (X, Y) sensiblement voire exactement normal à l'axe central Z3 du tore tressé 3.

A titre indicatif, la longueur du manchon 14 pourra être comprise entre 15 mm et 50 mm, de préférence entre 20 mm et 40 mm, et par exemple entre 22 mm et 30 mm.

De préférence, l'outil de sertissage 30 comprenant, tel que cela a été dit plus haut, une pince de sertissage 31 qui est agencée pour recevoir une préforme de manchon 12 qui est fendue sur toute sa longueur et qui présente une section transverse incurvée concave en forme de U comprenant un fond 12B arrondi et deux branches latérales 12C, 12D évasées, alors ladite pince de sertissage 31 est de préférence agencée pour venir former le manchon 14 en venant appliquer le fond 12B de la préforme de manchon 12 contre la section transverse des premier et second tronçons d'extrémité 5, 6 placés en saillie du corps du tore tressé 3, de préférence par approche radiale centrifuge en référence à l'axe central Z3 du tore tressé, puis en rabattant par déformation plastique, au moyen d'un premier mors latéral 33 et d'un second mors latéral 34, les branches latérales 12C, 12D de ladite préforme de manchon 12 autour de ladite section transverse, à travers le passage créé par les organes écarteurs 53, 54 entre le corps 3A du tore tressé 3 et lesdits premier et second tronçons d'extrémité 5, 6, de sorte à envelopper ladite section transverse, tel que cela est illustré en pointillés sur la figure 16.

On peut ainsi avantageusement solidariser les tronçons d'extrémité 5, 6 sans affecter le reste du tore tressé 3, en incorporant dans le manchon 14 une seule section unitaire du fil de tresse 4, sans créer une surépaisseur de matière qui occuperait toute la circonférence de la section du tore tressé 3, et plus globalement de la tringle 9, et qui pourrait de ce fait être potentiellement préjudiciable à la durée de vie ou aux performances du bandage pneumatique.

Par ailleurs, lorsque l'installation 1 se trouve en configuration de coupe C20, la pince de sertissage 31 se trouve de préférence dans une position de rechargement, ici sensiblement verticale et mors vers le bas tel que cela est illustré sur les figures 2 et 15, position de rechargement dans laquelle un outil de rechargement vient replacer une nouvelle préforme de manchon 12 dans ladite pince de sertissage 31.

De préférence les mors latéraux 33, 34 sont pourvus à cet effet chacun d'un rebord de retenue 37, 38 anti-retour et associés à un organe de suspension élastique 36, tel qu'un ressort 36, de manière à pouvoir coopérer par encliquetage avec les branches latérales 12C, 12D de ladite préforme de manchon 12, et ainsi empêcher une chute de ladite préforme de manchon 12 hors de la pince de sertissage 31 lors du passage de la configuration de coupe C20 à la configuration de sertissage C30, et plus particulièrement lors du mouvement de basculement M41 de la tête de permutation 41.

Avantageusement, on peut ainsi réaliser un rechargement de la pince de sertissage 31 en temps masqué et dans un faible encombrement, en particulier si l'on choisit de réaliser la préforme de manchon 12 à la demande, à chaque cycle de sertissage, en pliant en U et en découpant à la longueur du manchon souhaité un ruban métallique continu.

Selon une caractéristique préférentielle qui peut constituer une invention à part entière, la table de réception 2 présente, par rapport au plan de référence (X, Y) du bâti 100, une inclinaison, dite « inclinaison de compensation », selon un angle d'assiette A2 non nul dont la valeur correspond à l'angle d'hélice A7 des spires hélicoïdales 7 du tore tressé 3, tel que cela est visible sur la figure 18, de telle sorte que ladite table de réception 2 présente les premiers et second tronçons d'extrémité 5, 6, en vis-à-vis de l'outil de coupe 20 puis en vis-à-vis de l'outil de sertissage 30, selon une orientation qui est parallèle au plan de référence (X, Y) du bâti.

En pratique, l'angle d'assiette A2 correspond à l'angle selon lequel le plan de guidage de la table de réception 2, contenant la ligne génératrice L8, est incliné par rapport au plan de référence (X, Y), ici horizontal, du bâti 100.

De préférence, l'angle d'assiette A2 sera de même valeur absolue que l'angle d'hélice A7, et de signe opposé à ce dernier, de sorte à compenser l'inclinaison du fil de tresse 4 créée par rapport à la ligne génératrice L8 par ledit angle d'hélice A7.

Ainsi, on pourra avantageusement aligner parfaitement, ici à l'horizontale, les tronçons d'extrémité 5, 6 avec les fentes respective des pinces de coupe 21 et de sertissage 31 dans lesquelles on doit introduire lesdits tronçons d'extrémité 5, 6, ce qui évitera notamment une mauvaise insertion de l'un des tronçons d'extrémité 5, 6 dans l'un des outils de coupe 20 ou de sertissage 30, ou bien encore une éjection accidentelle de la préforme de manchon 12 hors de la pince de sertissage 31 lors de ladite insertion des tronçons d'extrémité 5, 6.

On obtiendra ainsi comme prévue une opération de coupe séquentielle, un tronçon d'extrémité après l'autre, et bien précise, puis un sertissage homogène du manchon 14. On améliorera donc la qualité et la fiabilité de la production de tringles 9.

Bien entendu, l'invention concerne également un procédé reprenant l'une et/ou l'autre des étapes décrites dans ce qui précède.

En référence aux figures, ledit procédé peut notamment comprendre la séquence d'étapes suivantes, ou une partie de cette séquence d'étapes, avantageusement commandées automatiquement par le système de commande 43.

Un tore tressé 3 étant placé sur la table de réception 2, les palettes 51, 52 sont avancées pour faire saillir les tronçons d'extrémité 5, 6 (figures 7A, 7B).

La table de réception 2 fait alors tourner, ici en rotation azimutale dans le sens horaire, au moyen d'un ensemble galet/contre-galet 10 motorisé, le manchon tressé 3 et ses tronçons d'extrémité 5, 6 saillants, jusqu'à détecter le passage de l'un desdits tronçons d'extrémité 6 par le point de repérage 060 défini par rapport au bâti 100 par le capteur 60 (figure 8A).

Une fois cette référence prise, et donc une fois la présence et l'orientation azimutale du tore tressé 3 connues par rapport au bâti 100, la table de réception 2 ajuste l'orientation azimutale dudit tore tressé 3, par une rotation autour de l'axe vertical, qui se confond de préférence sensiblement avec l'axe central Z3 dudit tore tressé 3, à l'angle d'assiette A2 près. De la sorte, la table de réception 2 place le secteur angulaire du tore tressé 3 contenant le point de croisement 13 des tronçons d'extrémité 5, 6 en vis-à-vis, angulairement, de l'emplacement de travail 42 (figure 8A).

La tête de permutation 41 est placée de sorte à présenter la pince de coupe 21 en vis-à-vis de l'emplacement de travail 42, et plus précisément sur cet emplacement de travail 42.

Les doigts de retenue 53, 54 sont alors engagés au contact des tronçons d'extrémité 5, 6 (figures 9A, 9B), les palettes 51, 52 escamotées, puis les doigts de retenue déployés (figures 10A, 10B).

Le chariot 46 rapproche alors le tore tressé 3 de l'emplacement de travail 42 et de l'outil de coupe 20, par un mouvement de translation transverse à l'axe de référence Z, de manière à venir placer les deux tronçons d'extrémité 5, 6 saillants dans la pince de coupe 21, le point de croisement 13 se retrouvant entre les deux jeux de couteaux 22, 23 (figures 2, 11A, 11B).

Le vérin d'actionnement 24 fait alors basculer les cames 25 afin d'actionner successivement les leviers 27 associés chacun à un jeu de couteaux 22, 23, de sorte à sectionner séquentiellement un tronçon d'extrémité 5, puis l'autre 6, en dégageant ainsi un vide entre lesdits tronçons d'extrémité 5, 6, à l'emplacement où se trouvait avant la coupe le point de croisement 13 (figure 11A).

Le chariot 46 manoeuvre alors en retrait la table de réception 2 et le tore tressé 3, dont les tronçons d'extrémité raccourcis sont toujours maintenus saillants par les doigts de retenue 53, 54, et ce afin d'extraire lesdits tronçons d'extrémité 5, 6 de la pince de coupe 21, et de permettre au vérin de permutation 44 de faire basculer la tête de permutation 41, ici dans le sens horaire sur les figures 3 et 4, pour éloigner la pince de coupe 21 et substituer à celle-ci la pince de sertissage 31 à l'emplacement de travail 42 (figures 3, 4, 12A, 12B).

Le chariot 46 avance alors de nouveau la table de réception 2 et le tore tressé 3, dont les tronçons d'extrémité 5, 6 raccourcis sont toujours maintenus saillants par les doigts de retenue 53, 54, jusqu'à revenir à l'emplacement de travail 42 qu'il avait précédemment quitté, de sorte à insérer les tronçons d'extrémité 5, 6 entre les mors de la pince de sertissage 31, au creux de la préforme de manchon 12 (figures 13A, 13B).

Le vérin d'actionnement 24 fait alors basculer la came 325 afin d'actionner le levier 327 qui commande le rapprochement des mors 33, 34 de sertissage, afin de refermer plastiquement la préforme de manchon 12 sur les tronçons d'extrémité 5, 6, comblant ainsi par un pont le vide précédemment laissé par l'outil de coupe 20 (figures 13A, 13B, 14).

Une fois le sertissage du manchon 14 effectué, on peut prévoir une étape de contrôle de présence dudit manchon, par exemple au moyen d'un capteur optique, tandis que les tronçons d'extrémité 5, 6 sont encore maintenus à distance du corps 3A du tore tressé 3 par les doigts de retenue 53, 54 (figure 14).

Finalement, les doigts de retenue 53, 54 sont extraits de sorte à libérer les tronçons d'extrémité 5, 6 solidarisés par le manchon 14, qui reviennent ainsi se plaquer contre la face radialement interne du tore tressé 3, par simple retour élastique (figure 5). On obtient ainsi une tringle 9 finie.

La tête de permutation 41 re-bascule en sens inverse (ici anti-horaire en référence aux figures 2 à 4) pour venir replacer la pince de coupe 21 à l'emplacement de travail 42, et permettre simultanément le rechargement d'une nouvelle préforme de manchon 12 dans la pince de sertissage 31.

Avantageusement, le système de commande 43, associé aux motorisations des différents mouvements, permettra d'enchaîner automatiquement ces différentes étapes, et notamment d'enchaîner à un même emplacement de travail 42 l'opération de coupe puis l'opération de sertissage.

## Revendications

1. Installation (1) de fabrication d'une tringle (9) destinée à renforcer un bandage, notamment un bandage pneumatique, ladite installation comprenant :
- une table de réception (2) qui est agencée pour recevoir un tore tressé (3) qui comprend au moins un fil, dit « fil de tresse » (4), qui s'étend longitudinalement depuis un premier tronçon d'extrémité (5) jusqu'à un second tronçon d'extrémité (6) et qui est entrelacé en spires hélicoïdales (7) autour de, et le long de, une ligne génératrice (L8) qui forme un anneau autour d'un axe principal qui correspond à l'axe central (Z3) dudit tore tressé (3),
- un outil de coupe (20), agencé pour sectionner le premier tronçon d'extrémité (5) et le second d'extrémité (6) afin d'ajuster la longueur desdits premier et second tronçons d'extrémité (5, 6),
- un outil de sertissage (30) agencé pour venir sertir un manchon (14) autour dudit premier tronçon d'extrémité (5) et dudit second tronçon d'extrémité (6) afin de réunir et fixer l'un à l'autre lesdits premier et second tronçons d'extrémité (5, 6),
ladite installation comprenant une unité de configuration (40) qui est agencée pour faire passer automatiquement ladite installation (1) d'une première configuration de travail, dite « configuration de coupe » (C20), dans laquelle la table de réception (2) coopère avec l'outil de coupe (20) de manière à positionner le tore tressé (3) et les premier et second tronçons d'extrémité (5, 6) pour que lesdits premier et second tronçons d'extrémité (5, 6) soient sectionnés par l'outil de coupe (20), à une seconde configuration de travail, dite « configuration de sertissage » (C30), distincte de la première configuration de travail (C20), dans laquelle la table de réception (2) coopère avec l'outil de sertissage (30) de manière à positionner le tore tressé (3) et les premier et second tronçons d'extrémité (5, 6) pour que l'outil de sertissage (30) réunisse lesdits premier et second tronçons d'extrémité au moyen du manchon (14).

2. Installation selon la revendication 1 dans laquelle le tore tressé (3) s'étend axialement entre un premier plan fictif, dit « premier plan de base » (P1), transverse à l'axe central (Z3) et tangent à une première face dudit tore tressé (3), et un second plan fictif, dit « second plan de base » (P2), transverse à l'axe central (Z3) et tangent à une seconde face du tore tressé axialement située à l'opposé de la première face par rapport à la ligne génératrice (L8), et en ce que la table de réception (2), l'outil de coupe (20) et l'outil de sertissage (30) sont agencés de manière à mettre le manchon (14) en place systématiquement sur la face radialement interne du tore tressé (3), orientée vers l'axe central (Z3), dans un espace qui est strictement contenu axialement entre le premier plan de base (P1) et le second plan de base (P2), et radialement contenu à l'intérieur de la ligne génératrice (L8) du tore tressé.

3. Installation selon la revendication 1 ou 2 comprenant un bâti (100) qui définit géométriquement un repère dit « repère fixe » comprenant un plan de référence (X, Y), de préférence horizontal, ainsi qu'un axe de référence (Z), de préférence vertical, qui est normal au plan de référence (X, Y), et en ce que l'unité de configuration (40) comprend une tête de permutation (41) qui porte à la fois l'outil de coupe (20) et l'outil de sertissage (30), et qui est agencée de manière à pouvoir positionner alternativement, par un premier mouvement dit «mouvement de permutation » (M41) effectué par rapport au bâti (100), ledit outil de coupe (20), pour la configuration de coupe (C20), et respectivement ledit outil de sertissage (30), pour la configuration de sertissage (C30), en vis-à-vis d'un même emplacement de travail (42) commun, qui est prédéterminé dans le repère fixe (X, Y, Z).

4. Installation selon la revendication 3 dans laquelle le mouvement de permutation (M41) s'effectue par basculement de la tête de permutation (41) autour d'un axe de basculement (Y41) qui est parallèle au plan de référence (X, Y) du bâti (100).

5. Installation selon la revendication 3 ou 4 comprenant un mécanisme d'actionnement partagé, motorisé par un même vérin d'actionnement (24), ledit mécanisme d'actionnement étant agencé de manière à commander sélectivement, selon que l'installation (1) se trouve en configuration de coupe (C20) ou au contraire en configuration de sertissage (C30), soit l'actionnement en fermeture de l'outil de coupe (20), soit, respectivement, l'actionnement en fermeture de l'outil de sertissage (30).

6. Installation selon l'une des revendications 3 à 5 dans laquelle l'unité de configuration (40) comprend un chariot (46) qui porte la table de réception (2) et qui est monté mobile selon un second mouvement, dit « mouvement d'engagement/dégagement » (M46), distinct du mouvement de permutation (M41), qui permet alternativement d'amener le tore tressé (3) à l'emplacement de travail (42) commun, pour permettre l'interaction entre le tore tressé (3) et l'outil de coupe (20) en configuration de coupe (C20), respectivement l'interaction entre le tore tressé (3) et l'outil de sertissage (30) en configuration de sertissage (C30), et d'éloigner le tore tressé (3) dudit emplacement de travail (42) commun lorsque la tête de permutation (41) doit opérer le mouvement de permutation (M41).

7. Installation selon la revendication 6 dans laquelle le mouvement d'engagement/dégagement (M46) s'effectue en translation parallèlement au plan de référence (X, Y) du bâti (100).

8. Installation selon l'une des revendications 3 à 7 dans laquelle la tête de permutation (41) est disposée à l'intérieur du périmètre du tore tressé (3).

9. Installation selon l'une quelconque des revendications 3 à 8 dans laquelle la table de réception (2) présente, par rapport au plan de référence (X, Y) du bâti (100), une inclinaison, dite « inclinaison de compensation » (A2), selon un angle d'assiette (A2) non nul dont la valeur correspond à l'angle d'hélice (A7) des spires hélicoïdales (7) du tore tressé (3), de telle sorte que ladite table de réception (2) présente les premiers et second tronçons d'extrémité (5, 6), en vis-à-vis de l'outil de coupe (20) puis en vis-à-vis de l'outil de sertissage (30), selon une orientation qui est parallèle au plan de référence (X, Y) du bâti.

10. Installation selon l'une des revendications précédentes dans laquelle l'unité de configuration (40) comprend des organes écarteurs (51, 52, 53, 54) agencés pour engager les premier et second tronçons d'extrémité (5, 6) afin de faire saillir lesdits tronçons d'extrémité par rapport au corps (3A) du tore tressé formé par les spires hélicoïdales (7), en ménageant ainsi un passage entre lesdits tronçons d'extrémité et le corps (3A) du tore tressé, de manière à rendre lesdits premier et second tronçons d'extrémité (5, 6) accessibles à l'outil de coupe (20), respectivement à l'outil de sertissage (30).

11. Installation selon la revendication 10 et l'une des revendications 6 ou 7 dans laquelle les organes écarteurs comprennent des doigts de retenue (53, 54) qui sont embarqués sur le chariot (46) de sorte à pouvoir maintenir les premier et second tronçons d'extrémité (5, 6) en position saillante par rapport au corps (3A) du tore tressé (3) aussi bien dans les configurations de travail (C20, C30) que lors des mouvements d'engagement/dégagement (M46).

12. Installation selon la revendication 10 ou 11 dans laquelle l'outil de sertissage (30) comprend une pince de sertissage (31) qui est agencée pour recevoir une préforme de manchon (12) qui est fendue sur toute sa longueur, de sorte que ladite préforme de manchon (12) présente une section transverse incurvée concave en forme de U comprenant un fond (12B) arrondi et deux branches latérales (12C, 12D) évasées, et pour venir former le manchon (14) en venant appliquer le fond (12B) de la préforme de manchon (12) contre la section transverse des premier et second tronçons d'extrémité (5, 6) placés en saillie du corps (3A) du tore tressé, de préférence par approche radiale centrifuge en référence à l'axe central (Z3) du tore tressé, puis en rabattant par déformation plastique, au moyen d'un premier mors latéral (33) et d'un second mors latéral (34), les branches latérales (12C, 12D) de ladite préforme de manchon (12) autour de ladite section transverse, à travers le passage créé par les organes écarteurs (53, 54) entre le corps (3A) du tore tressé (3) et lesdits premier et second tronçons d'extrémité (5, 6), de sorte à envelopper ladite section transverse.

13. Installation selon la revendication 12 dans laquelle, lorsque ladite installation se trouve en configuration de coupe (C20), la pince de sertissage (31) se trouve dans une position de rechargement, dans laquelle un outil de rechargement vient replacer une nouvelle préforme de manchon (12) dans ladite pince de sertissage, et en ce que les mors latéraux (33, 34) sont pourvus chacun d'un rebord de retenue (37, 38) anti-retour et associés à un organe de suspension élastique (36), tel qu'un ressort, de manière à pouvoir coopérer par encliquetage avec les branches latérales (12C, 12D) de ladite préforme de manchon, et ainsi empêcher une chute de ladite préforme de manchon (12) hors de la pince de sertissage (31) lors du passage de la configuration de coupe (C20) à la configuration de sertissage (C30).

14. Installation selon l'une quelconque des revendications précédentes dans laquelle l'outil de coupe (20) comprend une pince de coupe (21) à action différentielle, qui comporte un premier jeu de couteaux (22) permettant de couper le premier tronçon d'extrémité (5) et un second jeu de couteaux (23) permettant de couper le second tronçon d'extrémité (6), le second jeu de couteaux (23) étant agencé de manière à entrer en action après que le premier jeu de couteaux (22) a terminé de couper le premier tronçon d'extrémité (5).

## Patentansprüche

1. Anlage (1) zur Herstellung eines Wulstkerns (9), der dazu bestimmt ist, einen Reifen, insbesondere einen Luftreifen, zu verstärken, wobei die Anlage umfasst:
- einen Aufnahmetisch (2), der dazu ausgestaltet ist, einen geflochtenen Torus (3) aufzunehmen, der mindestens einen Draht, "Flechtdraht" (4) genannt, umfasst, der sich längs von einem ersten Endabschnitt (5) bis zu einem zweiten Endabschnitt (6) erstreckt und der in schraubenförmigen Windungen (7) um und entlang einer Erzeugenden (L8) geflochten ist, die einen Ring um eine Hauptachse bildet, die der Mittelachse (Z3) des geflochtenen Torus (3) entspricht,
- ein Schneidwerkzeug (20), das dazu ausgestaltet ist, den ersten Endabschnitt (5) und den zweiten Endabschnitt (6) zu trennen, um die Länge der ersten und zweiten Endabschnitte (5, 6) einzustellen,
- ein Crimpwerkzeug (30), das dazu ausgestaltet ist, eine Hülse (14) um den ersten Endabschnitt (5) und den zweiten Endabschnitt (6) zu crimpen, um die ersten und zweiten Endabschnitte (5, 6) zu vereinen und aneinander zu befestigen,
wobei die Anlage eine Konfigurationseinheit (40) umfasst, die dazu ausgestaltet ist, die Anlage (1) automatisch von einer ersten Arbeitskonfiguration, "Schneidkonfiguration" (C20) genannt, in welcher der Aufnahmetisch (2) mit dem Schneidwerkzeug (20) so zusammenwirkt, dass der geflochtene Torus (3) und die ersten und zweiten Endabschnitte (5, 6) positioniert werden, damit die ersten und zweiten Endabschnitte (5, 6) von dem Schneidwerkzeug (20) durchtrennt werden, in eine zweite Arbeitskonfiguration, "Crimpkonfiguration" (C30) genannt, die von der ersten Arbeitskonfiguration (C20) verschieden ist, übergehen zu lassen, in welcher der Aufnahmetisch (2) mit dem Crimpwerkzeug (30) so zusammenwirkt, dass der geflochtene Torus (3) und die ersten und zweiten Endabschnitte (5, 6) positioniert werden, damit das Crimpwerkzeug (30) die ersten und zweiten Endabschnitte mittels der Hülse (14) vereint.

2. Anlage nach Anspruch 1, in welcher sich der geflochtene Torus (3) axial erstreckt zwischen einer ersten fiktiven Ebene, "erste Basisebene" (P1) genannt, die quer zu der Mittelachse (Z3) verläuft und eine erste Seite des geflochtenen Torus (3) tangiert, und einer zweiten fiktiven Ebene, "zweite Basisebene" (P2) genannt, die quer zu der Mittelachse (Z3) verläuft und eine zweite Seite des geflochtenen Torus tangiert, die axial entgegengesetzt zu der ersten Seite in Bezug auf die Erzeugende (L8) gelegen ist, und dadurch, dass der Aufnahmetisch (2), das Schneidwerkzeug (20) und das Crimpwerkzeug (30) so ausgestaltet sind, dass die Hülse (14) systematisch auf der radial inneren Seite des geflochtenen Torus (3), die zu der Mittelachse (Z3) hin gerichtet ist, in einem Raum platziert wird, der strikt axial zwischen der ersten Basisebene (P1) und der zweiten Basisebene (P2) enthalten ist und radial im Inneren der Erzeugenden (L8) des geflochtenen Torus enthalten ist.

3. Anlage nach Anspruch 1 oder 2, umfassend einen Rahmen (100), der geometrisch ein Bezugssystem, "festes Bezugssystem" genannt, definiert, umfassend eine Referenzebene (X, Y), bevorzugt horizontal, sowie eine Referenzebene (Z), bevorzugt vertikal, die senkrecht zu der Referenzebene (X, Y) verläuft, und dadurch, dass die Konfigurationseinheit (40) einen Wechselkopf (41) umfasst, der sowohl das Schneidwerkzeug (20) als auch das Crimpwerkzeug (30) trägt und der so ausgestaltet ist, dass er alternierend, durch eine erste Bewegung, "Wechselbewegung" (M41) genannt, die in Bezug auf den Rahmen (100) ausgeführt wird, das Schneidwerkzeug (20) für die Schneidkonfiguration (C20) beziehungsweise das Crimpwerkzeug (30) für die Crimpkonfiguration (C30) gegenüber einer selben gemeinsamen Arbeitsposition (42) positionieren kann, die in dem festen Bezugssystem (X, Y, Z) vorherbestimmt wird.

4. Anlage nach Anspruch 3, bei der die Wechselbewegung (M41) durch Kippen des Wechselkopfes (41) um eine Kippachse (Y41) ausgeführt wird, die parallel zu der Referenzachse (X, Y) des Rahmens (100) verläuft.

5. Anlage nach Anspruch 3 oder 4, umfassend einen geteilten Betätigungsmechanismus, der von einem selben Betätigungszylinder (24) angetrieben wird, wobei der Betätigungsmechanismus so ausgestaltet ist, dass er selektiv, je nachdem, ob sich die Anlage (1) in der Schneidkonfiguration (C20) oder im Gegenteil in der Crimpkonfiguration (C30) befindet, entweder die schließende Betätigung des Schneidwerkzeugs (20) oder die schließende Betätigung des Crimpwerkzeugs (30) steuert.

6. Anlage nach einem der Ansprüche 3 bis 5, bei der die Konfigurationseinheit (40) einen Schlitten (46) umfasst, der den Aufnahmetisch (2) trägt und der gemäß einer zweiten Bewegung, "Einfahr-/Ausfahrbewegung" (M46) genannt, die von der Wechselbewegung (M41) verschieden ist, beweglich gelagert ist, die es ermöglicht, alternierend den geflochtenen Torus (3) zu der gemeinsamen Arbeitsposition (42) zu führen, um die Interaktion zwischen dem geflochtenen Torus (3) und dem Schneidwerkzeug (20) in der Schneidkonfiguration (C20) beziehungsweise die Interaktion zwischen dem geflochtenen Torus (3) und dem Crimpwerkzeug (30) in der Crimpkonfiguration (C30) zu ermöglichen, und den geflochtenen Torus (3) von der gemeinsamen Arbeitsposition (42) wegzuführen, wenn der Wechselkopf (41) die Wechselbewegung (M41) vornehmen muss.

7. Anlage nach Anspruch 6, bei der die Einfahr-/Ausfahrbewegung (M46) translatorisch parallel zu der Referenzebene (X, Y) des Rahmens (100) ausgeführt wird.

8. Anlage nach einem der Ansprüche 3 bis 7, bei welcher der Wechselkopf (41) im Inneren des Umfangs des geflochtenen Torus (3) angeordnet ist.

9. Anlage nach einem der Ansprüche 3 bis 8, bei welcher der Aufnahmetisch (2) in Bezug auf die Referenzebene (X, Y) des Rahmens (100) eine Neigung, "Ausgleichsneigung" (A2) genannt, um einen Trimmwinkel (A2) ungleich null aufweist, dessen Wert dem Schlagwinkel (A7) der schraubenförmigen Windungen (7) des geflochtenen Torus (3) entspricht, so dass der Aufnahmetisch (2) die ersten und zweiten Endabschnitte (5, 6) gegenüber dem Schneidwerkzeug (20), dann gegenüber dem Crimpwerkzeug (30) gemäß einer Ausrichtung präsentiert, die parallel zu der Referenzebene (X, Y) des Rahmens verläuft.

10. Anlage nach einem der vorhergehenden Ansprüche, bei der die Konfigurationseinheit (40) Spreizorgane (51, 52, 53, 54) umfasst, die dazu ausgestaltet sind, die ersten und zweiten Endabschnitte (5, 6) zu erfassen, um die Endabschnitte in Bezug auf den Körper (3A) des durch die schraubenförmigen Windungen (7) gebildeten geflochtenen Torus überstehen zu lassen, wobei somit ein Durchlass zwischen den Endabschnitten und dem Körper (3A) des geflochtenen Torus ausgebildet wird, so dass die ersten und zweiten Endabschnitte (5, 6) für das Schneidwerkzeug (20) beziehungswiese das Crimpwerkzeug (30) zugänglich gemacht werden.

11. Anlage nach Anspruch 10 und einem der Ansprüche 6 oder 7, bei der die Spreizorgane Haltefinger (53, 54) umfassen, die in den Schlitten (46) integriert sind, so dass sie die ersten und zweiten Endabschnitte (5, 6) in überstehender Position in Bezug auf den Körper (3A) des geflochtenen Torus (3) sowohl in den Arbeitskonfigurationen (C20, C30) als auch bei den Einfahr-/Ausfahrbewegungen (M46) halten können.

12. Anlage nach Anspruch 10 oder 11, bei der das Crimpwerkzeug (30) eine Crimpzange (31) umfasst, die dazu ausgestaltet ist, eine Hülsenvorform (12) aufzunehmen, die über ihre gesamte Länge geschlitzt ist, so dass die Hülsenvorform (12) einen konkaven gekrümmten Querschnitt in Form eines U aufweist, das einen gerundeten Boden (12B) und zwei aufgeweitete seitliche Schenkel (12C, 12D) umfasst, und die Hülse (14) zu formen, indem der Boden (12B) der Hülsenvorform (12) an den Querschnitt der ersten und zweiten Endabschnitte (5, 6), die vom Körper (3A) des geflochtenen Torus überstehend platziert sind, angelegt wird, bevorzugt durch zentrifugale radiale Annäherung in Bezug auf die Mittelachse (Z3) des geflochtenen Torus, indem dann durch plastische Verformung, mittels einer ersten seitlichen Backe (33) und einer zweiten seitlichen Backe (34), die seitlichen Schenkel (12C, 12D) der Hülsenvorform (12) um den Querschnitt umgelegt werden, durch den Durchlass hindurch, der von den Spreizorganen (53, 54) zwischen dem Körper (3A) des geflochtenen Torus (3) und den ersten und zweiten Endabschnitten (5, 6) erzeugt wird, so dass der Querschnitt umhüllt wird.

13. Anlage nach Anspruch 12, bei der, wenn sich die Anlage in der Schneidkonfiguration (C20) befindet, die Crimpzange (31) sich in einer Nachfüllposition befindet, in der ein Nachfüllwerkzeug eine neue Hülsenvorform (12) in der Crimpzange platziert, und dadurch, dass die seitlichen Backen (33, 34) jeweils mit einer Haltekante (37, 38), die das Zurückbewegen verhindert, versehen sind und einem Organ zur elastischen Aufhängung (36) wie etwa einer Feder zugeordnet sind, so dass sie durch Einrasten mit den seitlichen Schenkeln (12C, 12D) der Hülsenvorform zusammenwirken können, und so ein Herausfallen der Hülsenvorform (12) aus der Crimpzange (31) beim Übergang aus der Schneidkonfiguration (C20) in die Crimpkonfiguration (C30) verhindern.

14. Anlage nach einem der vorhergehenden Ansprüche, bei der das Schneidwerkzeug (20) eine differenziert wirkende Schneidzange (21) umfasst, die einen ersten Klingensatz (22) beinhaltet, der es ermöglicht, den ersten Endabschnitt (5) zu schneiden, und einen zweiten Klingensatz (23), der es ermöglicht, den zweiten Endabschnitt (6) zu schneiden, wobei der zweite Klingensatz (23) so ausgestaltet ist, dass er in Aktion tritt, nachdem der erste Klingensatz (22) das Schneiden des ersten Endabschnitts (5) beendet hat.

## Claims

1. Installation (1) for manufacturing a bead wire (9) intended to reinforce a tyre, in particular a pneumatic tyre, said installation including:
- a receiving table (2) that is adapted to receive a braided torus (3) that includes at least one wire, termed "braid wire" (4), that extends longitudinally from a first end section (5) to a second end section (6) and that is interlaced in helicoidal turns (7) around and along a generatrix line (L8) that forms a ring around a principal axis that corresponds to the central axis (Z3) of said braided torus (3),
- a cutting tool (20) adapted to section the first end section (5) and the second end section (6) in order to adjust the length of said first and second end sections (5, 6),
- a crimping tool (30) adapted to crimp a sleeve (14) around said first end section (5) and said second end section (6) in order to join and to fix said first and second end sections (5, 6) to one another,
said installation comprising a configuration unit (40) that is adapted to cause said installation (1) to pass automatically from a first working configuration, termed "cutting configuration" (C20), in which the receiving table (2) cooperates with the cutting tool (20) in such a manner as to position the braided torus (3) and the first and second end sections (5, 6) so that said first and second end sections (5, 6) are sectioned by the cutting tool (20), to a second working configuration, termed "crimping configuration" (C30), distinct from the first working configuration (C20), in which the receiving table (2) cooperates with the crimping tool (30) in such a manner as to position the braided torus (3) and the first and second end sections (5, 6) so that the crimping tool (30) joins said first and second end sections by means of the sleeve (14).

2. Installation according to Claim 1 wherein the braided torus (3) extends axially between a first imaginary plane, termed "first base plane" (P1), transverse to the central axis (Z3) and tangential to a first face of said braided torus (3), and a second imaginary plane, termed "second base plane" (P2), transverse to the central axis (Z3) and tangential to a second face of the braided torus situated axially opposite the first face relative to the generatrix line (L8), and in that the receiving table (2), the cutting tool (20) and the crimping tool (30) are adapted systematically to place the sleeve (14) on the radially internal face of the braided torus (3), oriented toward the central axis (Z3), in a space that is strictly contained axially between the first base plane (P1) and the second base plane (P2), and radially contained inside the generatrix line (L8) of the braided torus.

3. Installation according to Claim 1 or 2 comprising a frame (100) that geometrically defines a frame of reference termed "fixed frame of reference" comprising a preferably horizontal reference plane (X, Y) and a preferably vertical reference axis (Z) that is normal to the reference plane (X, Y) and in that the configuration unit (40) includes a switching head (41) that carries both the cutting tool (20) and the crimping tool (30) and that is adapted to be able alternately to position by a first movement termed "switching movement" (M41) effected relative to said frame (100) said cutting tool (20) for the cutting configuration (C20) and respectively said crimping tool (30) for the crimping configuration (C30) facing the same predetermined common working location (42) in the fixed frame of reference (X, Y, Z).

4. Installation according to Claim 3 wherein the switching movement (M41) is effected by pivoting the switching head (41) about a pivot axis (Y41) that is parallel to the reference plane (X, Y) of the frame (100).

5. Installation according to Claim 3 or 4 comprising a shared actuator mechanism driven by a common actuator cylinder (24), said actuator mechanism being adapted selectively, according to whether the installation (1) is in the cutting configuration (C20) or to the contrary in the crimping configuration (C30), to drive either actuation of the cutting tool (20) to close it or, respectively, actuation of the crimping tool (30) to close it.

6. Installation according to any one of Claims 3 to 5 wherein the configuration unit (40) includes a carriage (46) that carries the receiving table (2) and is mounted to be mobile in a second movement, termed "engagement/disengagement movement" (M46), distinct from the switching movement (M41), that alternately allows the braided torus (3) to be moved to the common working location (42) to allow the interaction between the braided torus (3) and the cutting tool (20) in the cutting configuration (C20), respectively the interaction between the braided torus (3) and the crimping tool (30) in the crimping configuration (C30), and to move the braided torus (3) away from said common working location (42) when the switching head (41) has to effect the switching movement (M41).

7. Installation according to Claim 6 wherein the engagement/disengagement movement (M46) is effected in translation parallel to the reference plane (X, Y) of the frame (100).

8. Installation according to any one of Claims 3 to 7 wherein the switching head (41) is disposed inside the perimeter of the braided torus (3).

9. Installation according to any one of Claims 3 to 8 wherein the receiving table (2) has, relative to the reference plane (X, Y) of the frame (100), an inclination, termed "compensation inclination" (A2), at a non-zero pitch angle (A2) the value of which corresponds to the helix angle (A7) of the helicoidal turns (7) of the braided torus (3) so that said receiving table (2) presents the first and second end sections (5, 6) facing the cutting tool (20) and then facing the crimping tool (30) in an orientation that is parallel to the reference plane (X, Y) of the frame.

10. Installation according to any one of the preceding claims wherein the configuration unit (40) includes spreader members (51, 52, 53, 54) adapted to engage the first and second end sections (5, 6) in order to cause said end sections to project relative to the body (3A) of the braided torus formed by the helicoidal turns (7), thus forming a passage between said end sections and the body (3A) of the braided torus so as to render said first and second end sections (5, 6) accessible to the cutting tool (20), respectively to the crimping tool (30).

11. Installation according to Claim 10 and either one of Claims 6 or 7 wherein the spreader members comprise retaining fingers (53, 54) on the carriage (46) so as to be able to hold the first and second end sections (5, 6) in a position projecting relative to the body (3A) of the braided torus (3) both in the working configuration (C20, C30) and during engagement/disengagement movements (M46).

12. Installation according to Claim 10 or 11 wherein the crimping tool (30) includes a crimper (31) that is adapted to receive a sleeve preform (12) that is slit over all its length so that sleeve preform (12) has a U-shape concave curved cross section comprising a rounded back (12B) and two flared lateral branches (12C, 12D) and to form the sleeve (14) by pressing the bottom (12B) of the sleeve preform (12) against the cross section of the first and second end sections (5, 6) projecting from the body (3A) of the braided torus, preferably by centrifugal radial approach with reference to the central axis (Z3) of the braided torus and then by bending in plastic deformation, by means of a first lateral jaw (33) and a second lateral jaw (34), the lateral branches (12C, 12D) of said sleeve preform (12) around said cross section through the passage created by the spreader members (53, 54) between the body (3A) of the braided torus (3) and said first and second end sections (5, 6) so as to envelop said cross section.

13. Installation according to Claim 12 wherein, when said installation is in the cutting configuration (C20), the crimper (31) is located in a reloading position in which a reloading tool comes to place a new sleeve preform (12) in said crimper and in that the lateral jaws (33, 34) are each provided with a non-return retaining rim (37, 38) and associated with an elastic suspension member (36) such as a spring so as to be able to cooperate clipping fashion with the lateral branches (12C, 12D) of said sleeve preform and thus to prevent said sleeve preform (12) falling out of the crimper (31) during the passage from the cutting configuration (C20) to the crimping configuration (C30).

14. Installation according to any one of the preceding claims wherein the cutting tool (20) includes a cutter (21) with differential action that includes a first set of blades (22) for cutting the first end section (5) and a second set of blades (23) for cutting the second end section (6), the second set of blades (23) being adapted to come into action after the first set of blades (22) has finished cutting the first end section (5).
